(19) Europäisches Patentamt
European Patent Office
Office européen des brevets

(11) EP 4 369 285 A1

(12) **EUROPÄISCHE PATENTANMELDUNG**

(43) Veröffentlichungstag:
**15.05.2024 Patentblatt 2024/20**

(21) Anmeldenummer: **22207080.7**

(22) Anmeldetag: **12.11.2022**

(51) Internationale Patentklassifikation (IPC):
***G06T 5/00*** *(2024.01)*

(52) Gemeinsame Patentklassifikation (CPC):
**G06T 5/94; G06T 5/10; G06T 5/50;** G06T 2200/24; G06T 2207/10072; G06T 2207/20056; G06T 2207/20104; G06T 2207/20224; G06T 2207/30004

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Bayer AG**
**51373 Leverkusen (DE)**

(72) Erfinder: **Die Erfindernennung liegt noch nicht vor**

(74) Vertreter: **BIP Patents**
**c/o Bayer Intellectual Property GmbH**
**Alfred-Nobel-Straße 50**
**40789 Monheim am Rhein (DE)**

(54) **ERZEUGUNG VON KÜNSTLICHEN KONTRASTMITTELVERSTÄRKTEN RADIOLOGISCHEN AUFNAHMEN**

(57) Die vorliegende Offenbarung befasst sich mit dem technischen Gebiet der Erzeugung von künstlichen kontrastmittelverstärkten radiologischen Aufnahmen.

EP 4 369 285 A1

## Beschreibung

Die vorliegende Offenbarung befasst sich mit dem technischen Gebiet der Erzeugung von künstlichen kontrastmittelverstärkten radiologischen Aufnahmen.

WO2019/074938A1 offenbart ein Verfahren zur Reduzierung der Menge an Kontrastmittel bei der Erzeugung von radiologischen Aufnahmen mit Hilfe eines künstlichen neuronalen Netzes.

In dem offenbarten Verfahren wird in einem ersten Schritt ein Trainingsdatensatz erzeugt. Der Trainingsdatensatz umfasst für eine Vielzahl an Personen für jede Person i) eine native radiologische Aufnahme (*zero-contrast image*), ii) eine radiologische Aufnahme nach der Applikation einer geringen Menge an Kontrastmittel (*low-contrast image*) und iii) eine radiologische Aufnahme nach der Applikation einer Standardmenge an Kontrastmittel (*full-contrast image*).

In einem zweiten Schritt wird ein künstliches neuronales Netz trainiert, für jede Person des Trainingsdatensatzes auf Basis der nativen Aufnahme und der Aufnahme nach Applikation einer geringen Menge an Kontrastmittel eine künstliche radiologische Aufnahme vorherzusagen, die einen Aufnahmebereich nach der Applikation der Standardmenge an Kontrastmittel zeigt. Die gemessene radiologische Aufnahme nach der Applikation einer Standardmenge an Kontrastmittel dient beim Training jeweils als Referenz (*ground truth*).

In einem dritten Schritt kann das trainierte künstliche neuronale Netz verwendet werden, für eine neue Person auf Basis einer nativen Aufnahme und einer radiologischen Aufnahme nach der Applikation einer geringen Menge an Kontrastmittel eine künstliche radiologische Aufnahme vorherzusagen, die den aufgenommenen Bereich so zeigt wie er aussehen würde, wenn eine Standardmenge an Kontrastmittel appliziert worden wäre.

Das in WO2019/074938A1 offenbarte Verfahren weist Nachteile auf.

So sind für das Trainieren des künstlichen neuronalen Netzes Trainingsdaten erforderlich. Es müssen eine Vielzahl an radiologischen Untersuchungen an einer Vielzahl an Personen vorgenommen und die Trainingsdaten generiert werden, um das Netz trainieren zu können.

Das in WO2019/074938A1 offenbarte künstliche neuronale Netz ist trainiert, eine radiologische Aufnahme nach der Applikation einer Standardmenge eines Kontrastmittels vorherzusagen. Das künstliche neuronale Netz ist nicht konfiguriert und nicht trainiert, eine radiologische Aufnahme nach der Applikation einer geringeren oder höheren Menge als der Standarmenge an Kontrastmittel vorherzusagen. Das in WO2019/074938A1 beschriebene Verfahren kann prinzipiell trainiert werden, eine radiologische Aufnahme nach der Applikation einer anderen Menge als der Standardmenge an Kontrastmittel vorherzusagen. Allerdings sind hierfür weitere Trainingsdaten und ein weiteres Training erforderlich.

Es wäre wünschenswert, radiologische Aufnahmen mit einer variablen Kontrastverstärkung erzeugen zu können, ohne dass für jede einzelne Kontrastverstärkung Trainingsdaten erzeugt und ein künstliches neuronales Netz trainiert werden müssen. Es wäre weiterhin wünschenswert, radiologische Aufnahmen mit einer variablen Kontrastverstärkung erzeugen zu können, wobei ein nachvollziehbarer, deterministischer Prozess zur Erzeugung der variablen Kontrastverstärkung angewendet wird. Dies erleichtert Zulassung und Anwendung eines entsprechenden Verfahrens im medizinischen Bereich, in dem falsch negative und falsch positive Befunde zu minimieren sind. Methoden des maschinellen Lernens nutzen statistische Modelle, deren Generalisierbarkeit beschränkt ist, da ihnen üblicherweise eine beschränkte Auswahl an Trainingsdaten zu Grunde liegt. Es wäre weiterhin wünschenswert, radiologische Aufnahmen mit einer variablen Kontrastverstärkung unter Verwendung einer breiten Vielfalt von Kontrastmitteln erzeugen zu können. Es wäre weiterhin wünschenswert, das Verfahren zur Erzeugung radiologischer Aufnahmen mit einer variablen Kontrastverstärkung mit einer breiten Vielfalt verschiedener Kontrastmittel unabhängig von ihren physischen, chemischen, physiologischen oder sonstigen Eigenschaften anwenden zu können. Es wäre weiterhin wünschenswert, das Verfahren zur Erzeugung radiologischer Aufnahmen mit einer variablen Kontrastverstärkung mit mindestens zwei verschiedenen Kontrastmitteln - vorzugsweise mit einem extrazellulären und mit einem intrazellulären Kontrastmittel - mit unterschiedlichen Eigenschaften verwenden zu können, um so das Bildgebungspotential der unterschiedlichen Kontrastmittel völlig ausschöpfen zu können. Bei der Verwendung unterschiedlicher Kontrastmittel im Verfahren zur Erzeugung radiologischer Aufnahmen mit einer variablen Kontrastverstärkung wäre es insbesondere wünschenswert, wenn diese unterschiedlichen Kontrastmittel in einer einzelnen Zusammensetzung enthalten wären und somit auf einmal verabreichet werden könnten.

Diese und weitere Aufgaben werden durch die Gegenstände der unabhängigen Patentansprüche gelöst. Bevorzugte Ausführungsformen der vorliegenden Offenbarung finden sich in den abhängigen Patentansprüchen, in der vorliegenden Beschreibung und in den Zeichnungen.

Ein erster Gegenstand der vorliegenden Offenbarung ist somit ein computer-implementiertes Verfahren zur Erzeugung einer kontrastverstärkten radiologischen Aufnahme, umfassend die Schritte:

- Empfangen oder Erzeugen einer ersten Repräsentation, wobei die erste Repräsentation einen Untersuchungsbereich eines Untersuchungsobjekts ohne Kontrastmittel oder nach der Applikation einer ersten Menge einer Zusammensetzung umfassend (i) ein extrazelluläres Kontrastmittel und (ii) ein intrazelluläres Kontrastmittel repräsentiert,

- Empfangen oder Erzeugen einer zweiten Repräsentation, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,

- Erzeugen einer dritten Repräsentation auf Basis der ersten Repräsentation und der zweiten Repräsentation, wobei das Erzeugen der dritten Repräsentation ein Subtrahieren der ersten Repräsentation von der zweiten Repräsentation umfasst,

- Erzeugen einer vierten Repräsentation, wobei das Erzeugen der vierten Repräsentation ein $\alpha$-faches Addieren der dritten Repräsentation zu der ersten Repräsentation umfasst, wobei $\alpha$ eine positive oder negative reelle Zahl ist,

- Ausgeben und/oder Speichern der vierten Repräsentation des Untersuchungsbereichs und/oder Übermitteln der vierten Repräsentation des Untersuchungsbereichs an ein separates Computersystem.

Ein weiterer Gegenstand der vorliegenden Offenbarung ist ein Computersystem umfassend:

einen Prozessor; und

einen Speicher, der ein Anwendungsprogramm speichert, das so konfiguriert ist, dass es, wenn es vom Prozessor ausgeführt wird, eine Operation durchführt, wobei die Operation umfasst:

- Empfangen oder Erzeugen einer ersten Repräsentation, wobei die erste Repräsentation einen Untersuchungsbereich eines Untersuchungsobjekts ohne Kontrastmittel oder nach der Applikation einer ersten Menge einer Zusammensetzung umfassend (i) ein extrazelluläres Kontrastmittel und (ii) ein intrazelluläres Kontrastmittel repräsentiert,

- Empfangen oder Erzeugen einer zweiten Repräsentation, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,

- Erzeugen einer dritten Repräsentation auf Basis der ersten Repräsentation und der zweiten Repräsentation, wobei das Erzeugen der dritten Repräsentation ein Subtrahieren der ersten Repräsentation von der zweiten Repräsentation umfasst,

- Erzeugen einer vierten Repräsentation, wobei das Erzeugen der vierten Repräsentation ein $\alpha$-faches Addieren der dritten Repräsentation zu der ersten Repräsentation umfasst, wobei $\alpha$ eine positive oder negative reelle Zahl ist,

- Ausgeben und/oder Speichern der vierten Repräsentation des Untersuchungsbereichs und/oder Übermitteln der vierten Repräsentation des Untersuchungsbereichs an ein separates Computersystem.

Ein weiterer Gegenstand der vorliegenden Offenbarung ist ein Computerprogramm, das in einen Arbeitsspeicher eines Computersystems geladen werden kann und dort das Computersystem dazu veranlasst, folgende Schritte ausführen:

- Empfangen oder Erzeugen einer ersten Repräsentation, wobei die erste Repräsentation einen Untersuchungsbereich eines Untersuchungsobjekts ohne Kontrastmittel oder nach der Applikation einer ersten Menge einer Zusammensetzung umfassend (i) ein extrazelluläres Kontrastmittel und (ii) ein intrazelluläres Kontrastmittel repräsentiert,

- Empfangen oder Erzeugen einer zweiten Repräsentation, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,

- Erzeugen einer dritten Repräsentation auf Basis der ersten Repräsentation und der zweiten Repräsentation, wobei das Erzeugen der dritten Repräsentation ein Subtrahieren der ersten Repräsentation von der zweiten Repräsentation umfasst,

- Erzeugen einer vierten Repräsentation, wobei das Erzeugen der vierten Repräsentation ein $\alpha$-faches Addieren der

dritten Repräsentation zu der ersten Repräsentation umfasst, wobei α eine positive oder negative reelle Zahl ist,

- Ausgeben und/oder Speichern der vierten Repräsentation des Untersuchungsbereichs und/oder Übermitteln der vierten Repräsentation des Untersuchungsbereichs an ein separates Computersystem.

Ein weiterer Gegenstand der vorliegenden Offenbarung ist eine Verwendung einer Zusammensetzung umfassend (i) ein extrazelluläres Kontrastmittel und (ii) ein intrazelluläres Kontrastmittel in einer radiologischen Untersuchung, wobei die Verwendung umfasst:

- Empfangen oder Erzeugen einer ersten Repräsentation, wobei die erste Repräsentation einen Untersuchungsbereich eines Untersuchungsobjekts ohne Kontrastmittel oder nach der Applikation einer ersten Menge der Zusammensetzung repräsentiert,
- Empfangen oder Erzeugen einer zweiten Repräsentation, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,
- Erzeugen einer dritten Repräsentation auf Basis der ersten Repräsentation und der zweiten Repräsentation, wobei das Erzeugen der dritten Repräsentation ein Subtrahieren der ersten Repräsentation von der zweiten Repräsentation umfasst,
- Erzeugen einer vierten Repräsentation, wobei das Erzeugen der vierten Repräsentation ein α-faches Addieren der dritten Repräsentation zu der ersten Repräsentation umfasst, wobei α eine positive oder negative reelle Zahl ist,
- Ausgeben und/oder Speichern der vierten Repräsentation des Untersuchungsbereichs und/oder Übermitteln der vierten Repräsentation des Untersuchungsbereichs an ein separates Computersystem.

Ein weiterer Gegenstand der vorliegenden Offenbarung ist eine Zusammensetzung umfassend (i) ein extrazelluläres Kontrastmittel und (ii) ein intrazelluläres Kontrastmittel zur Verwendung in einem radiologischen Untersuchungsverfahren, wobei die Verwendung umfasst:

- Empfangen oder Erzeugen einer ersten Repräsentation, wobei die erste Repräsentation einen Untersuchungsbereich eines Untersuchungsobjekts ohne Kontrastmittel oder nach der Applikation einer ersten Menge der Zusammensetzung repräsentiert,
- Empfangen oder Erzeugen einer zweiten Repräsentation, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,
- Erzeugen einer dritten Repräsentation auf Basis der ersten Repräsentation und der zweiten Repräsentation, wobei das Erzeugen der dritten Repräsentation ein Subtrahieren der ersten Repräsentation von der zweiten Repräsentation umfasst,
- Erzeugen einer vierten Repräsentation, wobei das Erzeugen der vierten Repräsentation ein α-faches Addieren der dritten Repräsentation zu der ersten Repräsentation umfasst, wobei α eine positive oder negative reelle Zahl ist,
- Ausgeben und/oder Speichern der vierten Repräsentation des Untersuchungsbereichs und/oder Übermitteln der vierten Repräsentation des Untersuchungsbereichs an ein separates Computersystem.

Ein weiterer Gegenstand der vorliegenden Offenbarung ist ein Kit umfassend ein Computerprogrammprodukt und eine Zusammensetzung umfassend (i) ein extrazelluläres Kontrastmittel und (ii) ein intrazelluläres Kontrastmittel, wobei das Computerprogrammprodukt ein Computerprogramm umfasst, das in einen Arbeitsspeicher eines Computersystems geladen werden kann und dort das Computersystem dazu veranlasst, folgende Schritte ausführen:

- Empfangen oder Erzeugen einer ersten Repräsentation, wobei die erste Repräsentation einen Untersuchungsbereich eines Untersuchungsobjekts ohne Kontrastmittel oder nach der Applikation einer ersten Menge der Zusammensetzung repräsentiert,

- Empfangen oder Erzeugen einer zweiten Repräsentation, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,

- Erzeugen einer dritten Repräsentation auf Basis der ersten Repräsentation und der zweiten Repräsentation, wobei das Erzeugen der dritten Repräsentation ein Subtrahieren der ersten Repräsentation von der zweiten Repräsentation umfasst,

- Erzeugen einer vierten Repräsentation, wobei das Erzeugen der vierten Repräsentation ein $\alpha$-faches Addieren der dritten Repräsentation zu der ersten Repräsentation umfasst, wobei $\alpha$ eine positive oder negative reelle Zahl ist,

- Ausgeben und/oder Speichern der vierten Repräsentation des Untersuchungsbereichs und/oder Übermitteln der vierten Repräsentation des Untersuchungsbereichs an ein separates Computersystem.

Die Gegenstände der vorliegenden Offenbarung werden nachstehend näher erläutert, ohne zwischen den Gegenständen (Verfahren, Computersystem, Computerprogramm(produkt), Verwendung, Zusammensetzung zur Verwendung, Kit) zu unterscheiden. Die nachfolgenden Erläuterungen sollen vielmehr für alle Gegenstände in analoger Weise gelten, unabhängig davon, in welchem Kontext (Verfahren, Computersystem, Computerprogramm(produkt), Verwendung, Zusammensetzung zur Verwendung, Kit) sie erfolgen.

Wenn in der vorliegenden Beschreibung oder in den Patentansprüchen Schritte in einer Reihenfolge genannt sind, bedeutet dies nicht zwingend, dass diese Offenbarung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen dar.

Die vorliegende Offenbarung beschreibt Mittel, mit denen auf Basis von mindestens zwei Repräsentationen, die einen Untersuchungsbereich eines Untersuchungsobjekts nach Zugabe/Anwendung/Verwendung unterschiedlicher Mengen an Kontrastmittel repräsentieren, eine oder mehrere künstliche radiologische Aufnahmen erzeugt werden, bei der/denen der Kontrast zwischen Bereichen mit Kontrastmittel und Bereichen ohne Kontrastmittel variiert werden kann.

Das "Untersuchungsobjekt" ist üblicherweise ein Lebewesen, vorzugsweise ein Säugetier, ganz besonders bevorzugt ein Mensch.

Der "Untersuchungsbereich" ist ein Teil des Untersuchungsobjekts, zum Beispiel ein Organ oder ein Teil eines Organs oder mehrere Organe oder ein anderer Teil des Untersuchungsobjekts.

Der Untersuchungsbereich kann beispielsweise eine Leber, eine Niere, ein Herz, eine Lunge, ein Gehirn, ein Magen, eine Blase, eine Prostatadrüse, ein Darm oder ein Teil davon oder ein anderer Teil des Körpers eines Säugetiers (z.B. eines Menschen) sein.

In einer Ausführungsform umfasst der Untersuchungsbereich eine Leber oder einen Teil einer Leber oder der Untersuchungsbereich ist eine Leber oder ein Teil einer Leber eines Säugetiers, vorzugsweise eines Menschen.

In einer weiteren Ausführungsform umfasst der Untersuchungsbereich ein Gehirn oder einen Teil eines Gehirns oder der Untersuchungsbereich ist ein Gehirn oder ein Teil eines Gehirns eines Säugetiers, vorzugsweise eines Menschen.

In einer weiteren Ausführungsform umfasst der Untersuchungsbereich ein Herz oder ein Teil eines Herzes oder der Untersuchungsbereich ist ein Herz oder ein Teil eines Herzes eines Säugetiers, vorzugsweise eines Menschen.

In einer weiteren Ausführungsform umfasst der Untersuchungsbereich einen Thorax oder einen Teil eines Thorax oder der Untersuchungsbereich ist ein Thorax oder ein Teil eines Thorax eines Säugetiers, vorzugsweise eines Menschen.

In einer weiteren Ausführungsform umfasst der Untersuchungsbereich einen Magen oder einen Teil eines Magens oder der Untersuchungsbereich ist ein Magen oder ein Teil eines Magens eines Säugetiers, vorzugsweise eines Menschen.

In einer weiteren Ausführungsform umfasst der Untersuchungsbereich eine Bauchspeicheldrüse oder einen Teil einer Bauchspeicheldrüse oder der Untersuchungsbereich ist eine Bauchspeicheldrüse oder ein Teil einer Bauchspeicheldrüse eines Säugetiers, vorzugsweise eines Menschen.

In einer weiteren Ausführungsform umfasst der Untersuchungsbereich eine Niere oder einen Teil einer Niere oder der Untersuchungsbereich ist eine Niere oder ein Teil einer Niere eines Säugetiers, vorzugsweise eines Menschen.

In einer weiteren Ausführungsform umfasst der Untersuchungsbereich einen oder beide Lungenflügel oder einen Teil eines Lungenflügels Säugetiers, vorzugsweise eines Menschen.

In einer weiteren Ausführungsform umfasst der Untersuchungsbereich eine Brust oder einen Teil einer Brust oder der Untersuchungsbereich ist eine Brust oder ein Teil einer Brust eines weiblichen Säugetiers, vorzugsweise eines

weiblichen Menschen.

In einer weiteren Ausführungsform umfasst der Untersuchungsbereich eine Prostata oder einen Teil einer Prostata oder der Untersuchungsbereich ist eine Prostata oder ein Teil einer Prostata eines männlichen Säugetiers, vorzugsweise eines männlichen Menschen.

Der Untersuchungsbereich, auch Aufnahmevolumen (engl.: *field of view*, FOV) genannt, stellt insbesondere ein Volumen dar, welches in radiologischen Aufnahmen abgebildet wird. Der Untersuchungsbereich wird typischerweise durch einen Radiologen, beispielsweise auf einer Übersichtsaufnahme (engl.: *localizer*) festgelegt. Selbstverständlich kann der Untersuchungsbereich alternativ oder zusätzlich auch automatisch, beispielsweise auf Grundlage eines ausgewählten Protokolls, festgelegt werden.

Der Untersuchungsbereich wird einer radiologischen Untersuchung unterzogen.

Die "Radiologie" ist das Teilgebiet der Medizin, das sich mit der Anwendung elektromagnetischer Strahlen und (unter Einbezug etwa der Ultraschalldiagnostik) mechanischer Wellen zu diagnostischen, therapeutischen und/oder wissenschaftlichen Zwecken befasst. Neben Röntgenstrahlen kommen auch andere ionisierende Strahlung wie Gammastrahlung oder Elektronen zum Einsatz. Da ein wesentlicher Einsatzzweck die Bildgebung ist, werden auch andere bildgebende Verfahren wie die Sonografie und die Magnetresonanztomographie (Kernspintomographie) zur Radiologie gerechnet, obwohl bei diesen Verfahren keine ionisierende Strahlung zum Einsatz kommt. Der Begriff "Radiologie" im Sinne der vorliegenden Offenbarung umfasst damit insbesondere die folgenden Untersuchungsmethoden: Computertomografie, Magnetresonanztomografie, Sonografie.

In einer Ausführungsform der vorliegenden Offenbarung handelt es sich bei der radiologischen Untersuchung um eine magnetresonanztomographische Untersuchung.

In einer weiteren Ausführungsform handelt es sich bei der radiologischen Untersuchung um eine computertomografische Untersuchung

In einer Ausführungsform handelt es sich bei der radiologischen Untersuchung um eine Ultraschalluntersuchung.

Bei radiologischen Untersuchungen werden häufig Kontrastmittel zur Kontrastverstärkung eingesetzt.

"Kontrastmittel" sind Substanzen oder Gemische von Substanzen, die die Darstellung von Strukturen und Funktionen des Körpers bei radiologischen Untersuchungen verbessern.

In der Computertomographie werden meist iodhaltige Lösungen als Kontrastmittel eingesetzt. In der Magnetresonanztomographie (MRT) werden üblicherweise superparamagnetische Substanzen (z.B. Eisenoxidnanopartikel, superparamagnetische Eisen-Platin-Partikel (SIPPs)) oder paramagnetische Substanzen (z.B. Gadolinium-Chelate, Mangan-Chelate) als Kontrastmittel verwendet. Im Fall der Sonografie werden üblicherweise Flüssigkeiten, die gasgefüllte Mikrobläschen (*microbubbles*) enthalten, intravenös verabreicht. Beispiele für Kontrastmittel sind in der Literatur zu finden (siehe z.B. A. S. L. Jascinth et al.: Contrast Agents in computed tomography: A Review, Journal of Applied Dental and Medical Sciences, 2016, Vol. 2, Issue 2, 143 - 149; H. Lusic et al.: X-ray-Computed Tomography Contrast Agents, Chem. Rev. 2013, 113, 3, 1641-1666; https://www.radiology.wisc.edu/wpcontent/uploads/2017/10/contrast-agents-tutorial.pdf, M. R. Nough et al.: Radiographic and magnetic resonances contrast agents: Essentials and tips for safe practices, World J Radiol. 2017 Sep 28; 9(9): 339-349; L. C. Abonyi et al.: Intravascular Contrast Media in Radiography: Historical Development & Review of Risk Factors for Adverse Reactions, South American Journal of Clinical Research, 2016, Vol. 3, Issue 1, 1-10; ACR Manual on Contrast Media, 2020, ISBN: 978-1-55903-012-0; A. Ignee et al.: Ultrasound contrast agents, Endosc Ultrasound. 2016 Nov-Dec; 5(6): 355-362).

MR-Kontrastmittel entfalten ihre Wirkung, indem sie die Relaxationszeiten der Strukturen, die Kontrastmittel aufnehmen, verändern. Es lassen sich zwei Stoffgruppen unterscheiden: para- und superparamagnetische Stoffe. Beide Stoffgruppen besitzen ungepaarte Elektronen, die ein magnetisches Feld um die einzelnen Atome bzw. Moleküle induzieren. Superparamagnetische führen zu einer überwiegenden T2-Verkürzung, während paramagnetische Kontrastmittel im Wesentlichen zu einer Tl-Verkürzung führen. Die Wirkung dieser Kontrastmittel ist indirekt, da das Kontrastmittel selbst kein Signal abgibt, sondern nur die Signalintensität in seiner Umgebung beeinflusst. Ein Beispiel für ein superparamagnetisches Kontrastmittel sind Eisenoxidnanopartikel (SPIO, engl.: *superparamagnetic iron oxide*). Beispiele für paramagnetische Kontrastmittel sind Gadolinium-Chelate wie Gadopentetat-Dimeglumin (Handelsname: Magnevist® u.a.), Gadotersäure (Dotarem®, Dotagita®, Cyclolux®), Gadodiamid (Omniscan®), Gadoteridol (ProHance®), Gadobutrol (Gadovist®) und Gadoxetsäure (Primovist®/Eovist®).

Die vorliegende Offenbarung umfasst die Verwendung einer Zusammensetzung umfassend (i) ein extrazelluläres Kontrastmittel und (ii) ein intrazelluläres Kontrastmittel. Die Einteilung "extrazelluläres"/"intrazelluläres" Kontrastmittel ergibt sich nach ihrem Verteilungsmuster im Gewebe.

Die stark hydrophilen Eigenschaften von extrazellulären Kontrastmitteln und ihr niedriges Molekulargewicht führen nach intravenöser Applikation zu einer raschen Diffusion in den interstitiellen Raum. Sie werden nach einer gewissen, vergleichsweise kurzen Zeitspanne der Zirkulation im Blutkreislauf über die Nieren ausgeschieden.

Zu den extrazellulären MR-Kontrastmitteln zählen beispielsweise die Gadolinium-Chelate Gadobutrol (Gadovist®), Gadoteridol (Prohance®), Gadotersäure (Dotarem®), Gadopentetsäure (Magnevist®) und Gadodiamid (Omnican®). Weitere extrazelluläre gadoliniumhaltige Kontrastmittel sind in WO2016/193190 beschrieben (Gadoquatrane).

Intrazelluläre Kontrastmittel werden zu gewissen Anteilen in die Zellen von Geweben aufgenommen und anschließend wieder ausgeschieden. Hepatobiliäre Kontrastmittel zeichnen sich beispielsweise dadurch aus, dass sie spezifisch von Leberzellen, den Hepatozyten, aufgenommen werden, sich im Funktionsgewebe (Parenchym) anreichern und den Kontrast in gesundem Lebergewebe verstärken. Ein Beispiel eines hepatobiliären Kontrastmittels ist das Dinatriumsalz der Gadoxetsäure (Gd-EOB-DTPA Dinatrium), das in dem US-Patent No. 6,039,931A beschrieben ist unter dem Markennamen Primovist® und Eovist® kommerziell erhältlich ist. Weitere hepatobiliäre Kontrastmittel sind u.a. in WO2022/194777 beschrieben.

Die Erzeugung einer künstlichen radiologischen Aufnahme mit einer variablen Kontrastverstärkung basiert auf mindestens zwei Repräsentationen des Untersuchungsbereichs, einer ersten Repräsentation und einer zweiten Repräsentation.

Die erste Repräsentation repräsentiert den Untersuchungsbereich ohne Kontrastmittel oder nach der Applikation einer ersten Menge einer Zusammensetzung umfassend (i) ein extrazelluläres Kontrastmittel und (ii) ein intrazelluläres Kontrastmittel

Die zweite Repräsentation repräsentiert den Untersuchungsbereich nach der Applikation einer zweiten Menge der Zusammensetzung. Die zweite Menge ist größer als die erste Menge (wobei die erste Menge wie beschrieben auch Null sein kann). Der Ausdruck "nach der zweiten Menge der Zusammensetzung" soll nicht so verstanden werden, dass sich die erste Menge und die zweite Menge der Zusammensetzung in dem Untersuchungsbereich addieren (es sei denn die erste Menge ist Null). Der Ausdruck "die Repräsentation repräsentiert den Untersuchungsbereich nach der Applikation einer (ersten oder zweiten) Menge" soll also eher bedeuten: "die Repräsentation repräsentiert den Untersuchungsbereich mit einer (ersten oder zweiten) Menge" oder "die Repräsentation repräsentiert den Untersuchungsbereich umfassend eine (erste oder zweite) Menge".

Ist die erste Menge ungleich Null, dann repräsentieren die erste Repräsentation und die zweite Repräsentation den Untersuchungsbereich vorzugsweise (aber nicht notwendigerweise) in dem gleichen zeitlichen Abstand zur Applikation des Kontrastmittels. Ist die erste Menge gleich Null, kann der zeitliche Abstand zum Zeitpunkt der Applikation des Kontrastmittels bei der zweiten Repräsentation beliebig gewählt werden.

Vorzugsweise ist sowohl die erste Menge als auch die zweite Menge der Zusammensetzung kleiner als die Standardmenge. Vorzugsweise ist die Menge der einzelnen Komponenten der Zusammensetzung, also des extrazellulären und des intrazellulären Kontrastmittels sowohl in der ersten als auch in der zweiten Menge der Zusammensetzung kleiner als die Standardmenge.

Vorzugsweise ist das Verhältnis der molaren Mengen der einzelnen Komponenten der Zusammensetzung in der ersten Menge und der zweiten Menge gleich.

Die Standardmenge ist üblicherweise die vom Hersteller und/oder Vertreiber der Zusammensetzung und/oder der Komponenten der Zusammensetzung empfohlene und/oder die von einer Zulassungsbehörde zugelassene und/oder die in einem Beipackzettel zur Zusammensetzung und/oder zu den Komponenten der Zusammensetzung aufgeführte Menge.

So beträgt die Standardmenge von Primovist® beispielsweise 0,025 mmol Gd-EOB-DTPA Dinatrium / kg Körpergewicht.

In einer Ausführungsform der vorliegenden Offenbarung handelt es sich bei der Zusammensetzung um eine Zusammensetzung umfassend (i) ein extrazelluläres Kontrastmittel und (ii) ein hepatobiliäres Kontrastmittel.

In einer Ausführungsform der vorliegenden Offenbarung handelt es sich bei der Zusammensetzung um eine Zusammensetzung umfassend (i) ein extrazelluläres Kontrastmittel und (ii) ein hepatobiliäres Kontrastmittel umfassend ein paramagnetisches Metallzentrum und einen makrozyklischen Chelator.

In einer Ausführungsform der vorliegenden Offenbarung handelt es sich bei der Zusammensetzung um eine Zusammensetzung umfassend (i) ein extrazelluläres Kontrastmittel umfassend ein paramagnetisches Metallzentrum und einen makrozyklischer Chelator und (ii) ein hepatobiliäres Kontrastmittel umfassend ein paramagnetisches Metallzentrum und einen makrozyklischen Chelator.

In einer Ausführungsform ist das paramagnetische Metallzentrum im extrazellulären und/oder im hepatobiliären Kontrastmittel ein Lanthanoid. Vorzugsweise ist das paramagnetische Metallzentrum im extrazellulären und/oder im hepatobiliären Kontrastmittel Gd, besonders bevorzugt $Gd^{3+}$.

In einer Ausführungsform ist das extrazelluläre Kontrastmittel eine Verbindung der Formel (I), eine Verbindung der Formel (II) oder eine Verbindung der Formel (III), wobei die Verbindung der Formel (I) die Formel

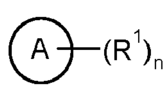 hat,

(I),

wobei:

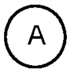 eine 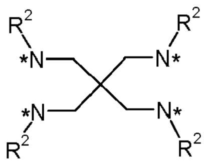

Gruppe-repräsentiert,

wobei * die Anknüpfung zu $R^1$ darstellt,

$R^1$ eine Gruppe $R^3$ darstellt,

n = 4 ist,

$R^2$ ein Wasserstoffatom darstellt,

$R^3$ eine Gruppe darstellt, die aus

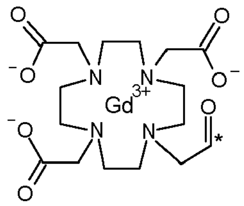

und

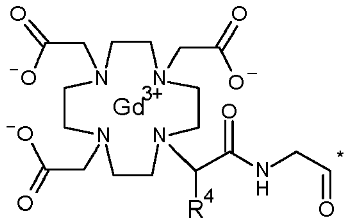

ausgewählt wird,

wobei * die Anknüpfung zu dem Rest des Moleküls darstellt,

$R^4$ ein Wasserstoffatom oder eine Methylgruppe darstellt,

oder ein Stereoisomer, Tautomer, Hydrat, Solvat oder Salz davon, oder eine Mischung davon;

wobei die Verbindung der Formel (II) die Formel

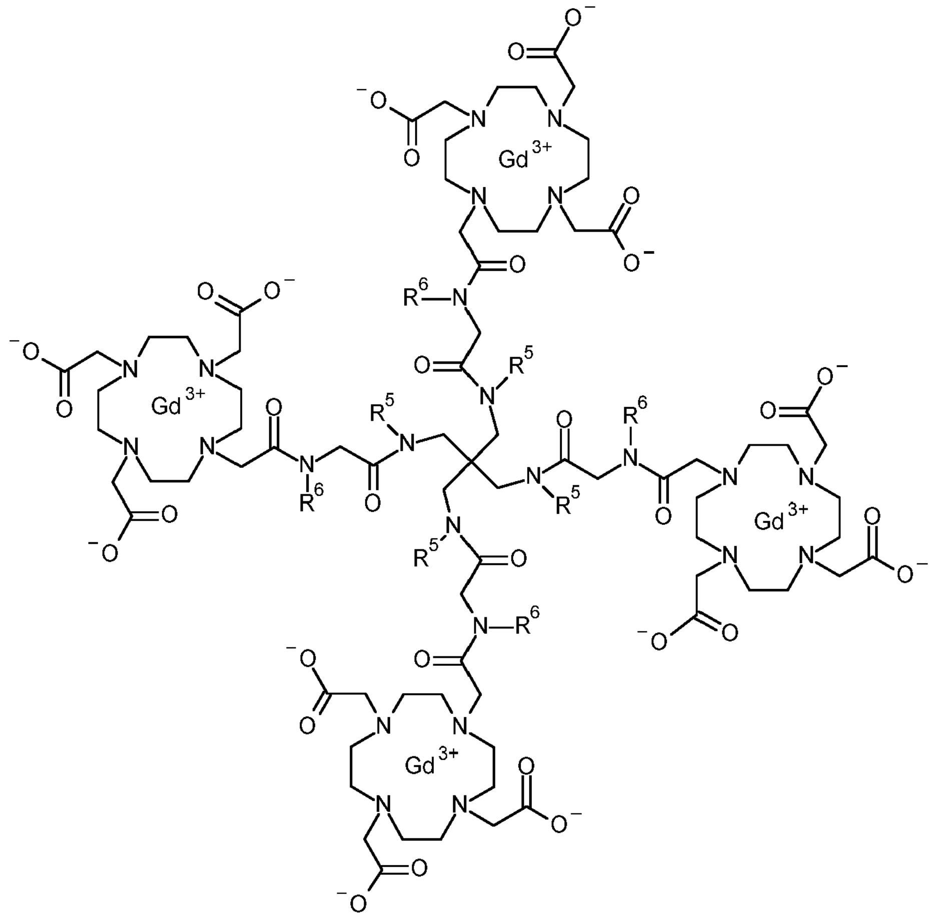

(**II**) hat,

wobei

$R^5$ ein Wasserstoffatom darstellt,

$R^6$ eine Gruppe ausgewählt aus

$C_1$-$C_4$-Alkyl, $C_3$-$C_5$-Cycloalkyl, ($C_1$-$C_2$-Alkoxy)-($C_2$-$C_3$-Alkyl)- und Phenyl darstellt,

wobei die $C_1$-$C_4$-Alkylgruppe gegebenenfalls gleich oder verschieden mit einer Phenylgruppe substituiert ist, wobei die Phenylgruppe gegebenenfalls ein-, zwei- oder dreimal, gleich oder verschieden mit einem Halogenatom oder einer Gruppe, ausgewählt aus $C_1$-$C_3$-Alkyl, $C_1$-$C_3$-Haloalkyl and $C_1$-$C_3$-Alkoxy,
und
wobei die Phenylgruppe gegebenenfalls ein-, zwei- oder dreimal, gleich oder verschieden, mit einem Halogenatom oder einer Gruppe ausgewählt aus $C_1$-$C_3$-Alkyl, $C_1$-$C_3$-Haloalkyl und $C_1$-$C_3$-Alkoxy substituiert ist

oder ein Stereoisomer, Tautomer, Hydrat, Solvat oder Salz davon, oder eine Mischung davon;

und die Verbindung der Formel (III) die Formel,

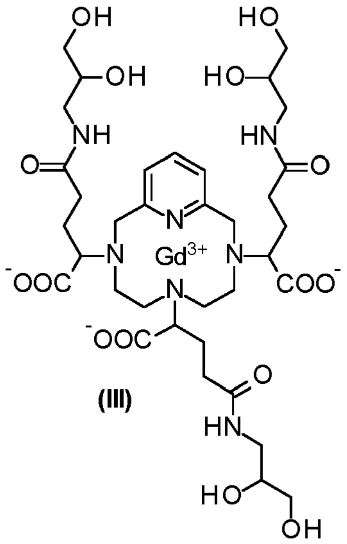

(III)

hat.

In einer Ausführungsform ist das hepatobiliäre Kontrastmittel eine Verbindung der Formel (IV) oder eine Verbindung der Formel (V) wobei die Verbindung der Formel (IV) die Formel

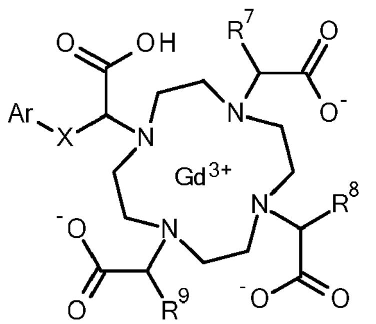

**(IV)**

hat, wobei

Ar eine Gruppe ausgewählt aus

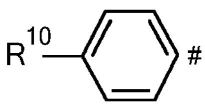

und

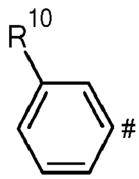

darstellt,

wobei # die Anknüpfung zu X darstellt,

X eine Gruppe darstellt, die aus $CH_2$ and $(CH_2)_3$ ausgewählt wird,

$R^7$ und $R^9$ unabhängig voneinander ein Wasserstoffatom oder eine $-CH_2OH$-Gruppe darstellen,

$R^8$ ein Wasserstoffatom ist oder eine Gruppe darstellt, die aus $C_1$-$C_3$-Alkyl, $-CH_2OH$, $-(CH_2)_2OH$ und $-CH_2OCH_3$ ausgewählt wird,

$R^{10}$ eine Gruppe darstellt, die aus $C_2$-$C_5$-Alkoxy, ($C_1$-$C_3$-Alkoxy)-$(CH_2)_2$-O-, ($C_1$-$C_3$-Alkoxy)-$(CH_2)_2$-O-$(CH_2)_2$-O- and ($C_1$-$C_3$-Alkoxy)-$(CH_2)_2$-O-$(CH_2)_2$-O-$(CH_2)_2$-O- ausgewählt wird, wobei die $C_1$-$C_3$-Alkoxy und $C_2$-$C_5$-Alkoxy Gruppen optional ein- zwei-, drei- oder viermal mit einem Fluoratom substituiert sind,

oder ein Stereoisomer, Tautomer, Hydrat, Solvat oder Salz davon, oder eine Mischung davon;

und die Verbindung der Formel (V) die Formel

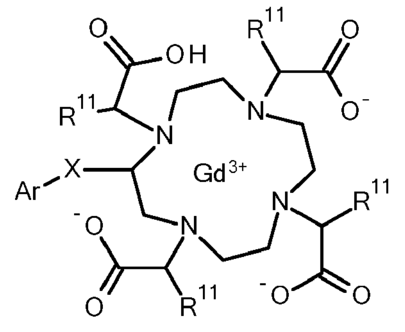

**(V)**

hat, wobei

Ar eine Gruppe ausgewählt aus

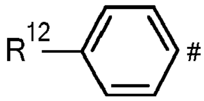

und

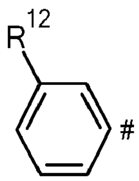

darstellt,

wobei # die Anknüpfung zu X darstellt,

X eine Gruppe darstellt, die aus $CH_2$ and $(CH_2)_2$ ausgewählt wird,

$R^{11}$ ein Wasserstoffatom oder eine Gruppe ausgewählt aus $C_1$-$C_3$-Alkyl, $-CH_2OH$, $-(CH_2)_2OH$ and $-CH_2OCH_3$ darstellt,

$R^{12}$ eine Gruppe ausgewählt aus $C_2$-$C_5$-Alkoxy, ($H_3C$-$CH_2O$)-$(CH_2)_2$-O-, ($H_3C$-$CH_2O$)-$(CH_2)_2$-O-$(CH_2)_2$-O- and ($H_3C$-$CH_2O$)-$(CH_2)_2$-O-$(CH_2)_2$-O-$(CH_2)_2$-O- darstellt,

oder ein Stereoisomer, Tautomer, Hydrat, Solvat oder Salz davon, oder eine Mischung davon.

In einer Ausführungsform der vorliegenden Offenbarung handelt es sich bei der Zusammensetzung um eine Zusammensetzung umfassend (i) ein extrazelluläres Kontrastmittel der Formel (I), der Formel (II) oder der Formel (III), wobei die Verbindung der Formel (I) die Formel

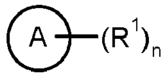 hat,

**(I)**,

wobei:

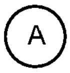 eine 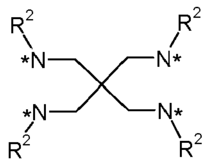

Gruppe-repräsentiert,

wobei * die Anknüpfung zu $R^1$ darstellt,

$R^1$ eine Gruppe $R^3$ darstellt,

n = 4 ist,

$R^2$ ein Wasserstoffatom darstellt,

$R^3$ eine Gruppe darstellt, die aus

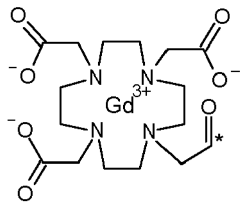

und

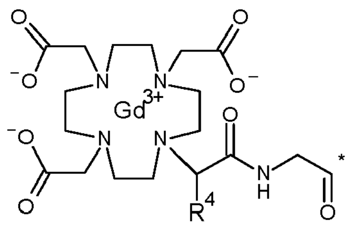

ausgewählt wird,

wobei * die Anknüpfung zu dem Rest des Moleküls darstellt,

$R^4$ ein Wasserstoffatom oder eine Methylgruppe darstellt,

oder ein Stereoisomer, Tautomer, Hydrat, Solvat oder Salz davon, oder eine Mischung davon;

wobei die Verbindung der Formel (II) die Formel

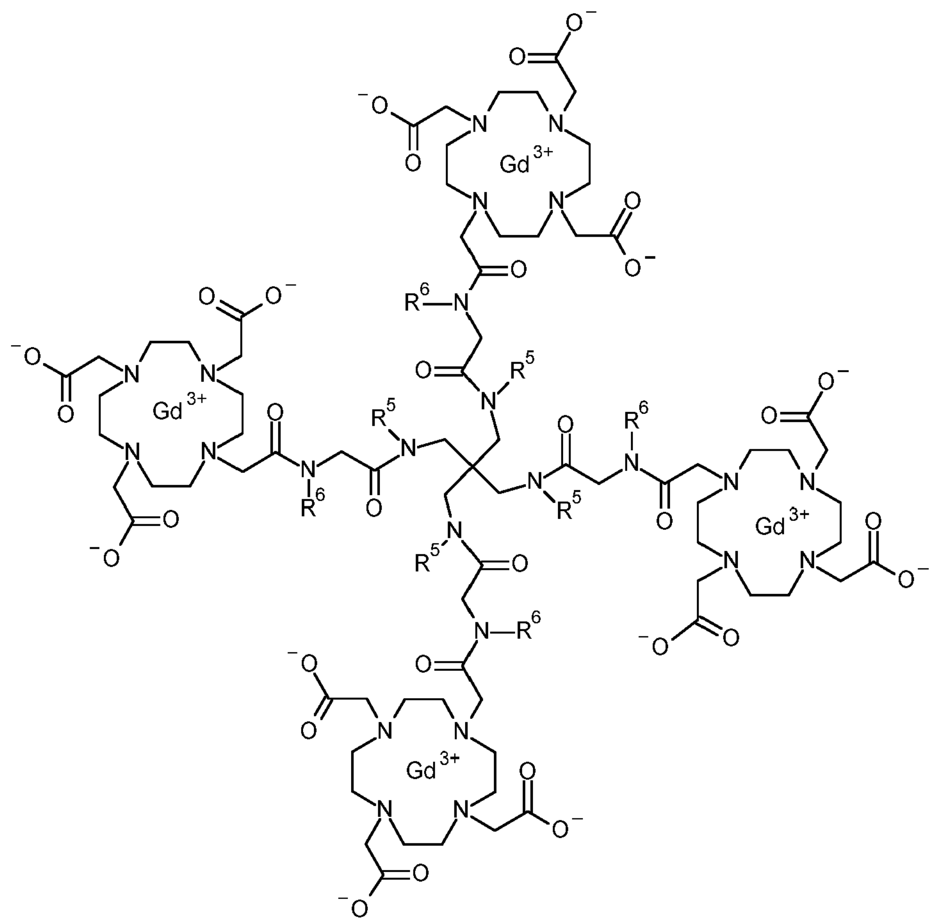

(**II**) hat,

wobei

$R^5$ ein Wasserstoffatom darstellt,

$R^6$ eine Gruppe ausgewählt aus

$C_1$-$C_4$-Alkyl, $C_3$-$C_5$-Cycloalkyl, ($C_1$-$C_2$-Alkoxy)-($C_2$-$C_3$-Alkyl)- und Phenyl darstellt,

wobei die $C_1$-$C_4$-Alkylgruppe gegebenenfalls gleich oder verschieden mit einer Phenylgruppe substituiert ist, wobei die Phenylgruppe gegebenenfalls ein-, zwei- oder dreimal, gleich oder verschieden mit einem Halogenatom oder einer Gruppe, ausgewählt aus $C_1$-$C_3$-Alkyl, $C_1$-$C_3$-Haloalkyl and $C_1$-$C_3$-Alkoxy,
und
wobei die Phenylgruppe gegebenenfalls ein-, zwei- oder dreimal, gleich oder verschieden, mit einem Halogenatom oder einer Gruppe ausgewählt aus $C_1$-$C_3$-Alkyl, $C_1$-$C_3$-Haloalkyl und $C_1$-$C_3$-Alkoxy substituiert ist

oder ein Stereoisomer, Tautomer, Hydrat, Solvat oder Salz davon, oder eine Mischung davon;

und die Verbindung der Formel (III) die Formel,

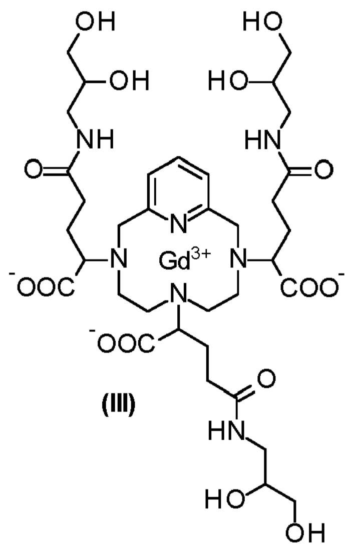

(III)

hat.

und (ii) ein hepatobiliäres Kontrastmittel der Formel (IV) oder der Formel (V) wobei die Verbindung der Formel (IV) die Formel

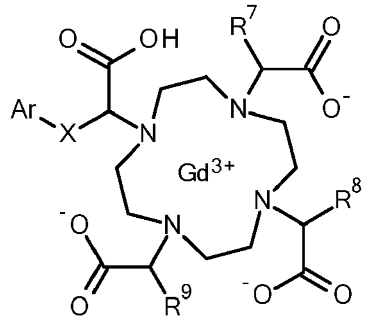

**(IV)**

hat, wobei

Ar eine Gruppe ausgewählt aus

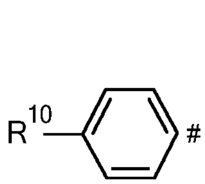

und

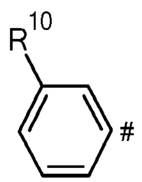

darstellt,

wobei # die Anknüpfung zu X darstellt,

X eine Gruppe darstellt, die aus $CH_2$ and $(CH_2)_3$ ausgewählt wird,

$R^7$ und $R^9$ unabhängig voneinander ein Wasserstoffatom oder eine $-CH_2OH$-Gruppe darstellen,

$R^8$ ein Wasserstoffatom ist oder eine Gruppe darstellt, die aus $C_1$-$C_3$-Alkyl, $-CH_2OH$, $-(CH_2)_2OH$ und $-CH_2OCH_3$ ausgewählt wird,

$R^{10}$ eine Gruppe darstellt, die aus $C_2$-$C_5$-Alkoxy, ($C_1$-$C_3$-Alkoxy)-$(CH_2)_2$-O-, ($C_1$-$C_3$-Alkoxy)-$(CH_2)_2$-O-$(CH_2)_2$-O- und ($C_1$-$C_3$-Alkoxy)-$(CH_2)_2$-O-$(CH_2)_2$-O-$(CH_2)_2$-O- ausgewählt wird, wobei die $C_1$-$C_3$-Alkoxy und $C_2$-$C_5$-Alkoxy Gruppen optional ein- zwei-, drei- oder viermal mit einem Fluoratom substituiert sind,

oder ein Stereoisomer, Tautomer, Hydrat, Solvat oder Salz davon, oder eine Mischung davon;
und die Verbindung der Formel (V) die Formel

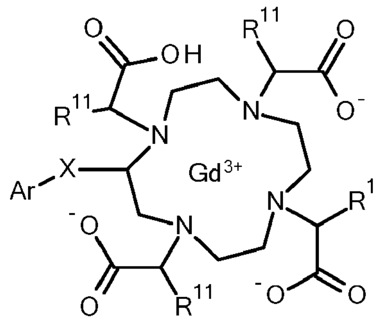

**(V)**

hat, wobei

Ar eine Gruppe ausgewählt aus

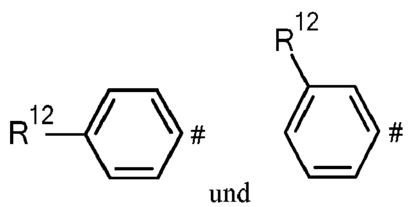

und

darstellt,

wobei # die Anknüpfung zu X darstellt,

X eine Gruppe darstellt, die aus $CH_2$ and $(CH_2)_2$ ausgewählt wird,

$R^{11}$ ein Wasserstoffatom oder eine Gruppe ausgewählt aus $C_1$-$C_3$-Alkyl, -$CH_2OH$, -$(CH_2)_2OH$ and -$CH_2OCH_3$ darstellt,

$R^{12}$ eine Gruppe ausgewählt aus $C_2$-$C_5$-Alkoxy, ($H_3C$-$CH_2O$)-$(CH_2)_2$-O-, ($H_3C$-$CH_2O$)-$(CH_2)_2$-O-$(CH_2)_2$-O- and ($H_3C$-$CH_2O$)-$(CH_2)_2$-O-$(CH_2)_2$-O-$(CH_2)_2$-O- darstellt,

oder ein Stereoisomer, Tautomer, Hydrat, Solvat oder Salz davon, oder eine Mischung davon.

In einer bevorzugten Ausführungsform der vorliegenden Offenbarung handelt es sich bei der Zusammensetzung um eine Zusammensetzung umfassend (i) ein extrazelluläres Kontrastmittel der Formel (I)

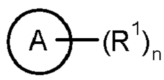

**(I)**,

wobei:

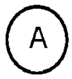

eine Gruppe

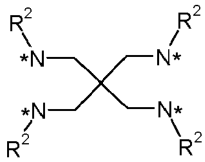

darstellt,

wobei * die Anknüpfung zu $R^1$ darstellt;

$R^1$ eine Gruppe $R^3$ darstellt;

n = 4 ist,

$R^2$ ein Wasserstoffatom darstellt,

$R^3$ eine Gruppe darstellt, die aus

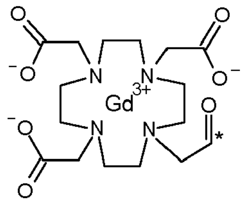

und

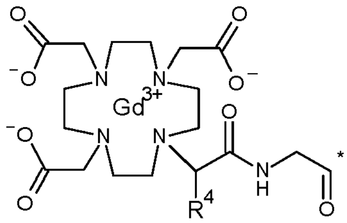

ausgewählt wird,

wobei * die Anknüpfung zu dem Rest des Moleküls darstellt,

$R^4$ ein Wasserstoffatom oder eine Methylgruppe darstellt,

oder ein Stereoisomer, Tautomer, Hydrat, Solvat oder Salz davon, oder eine Mischung davon; und (ii) ein hepatobiliäres Kontrastmittel der Formel (IV)

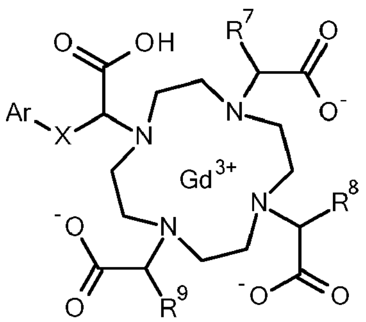

**(IV)**

,

wobei

Ar eine Gruppe ausgewählt aus

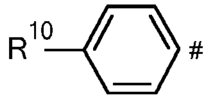
und
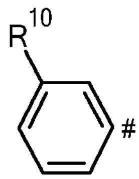

darstellt,

wobei # die Anknüpfung zu X darstellt, X eine Gruppe ausgewählt aus $CH_2$ and $(CH_2)_3$ darstellt,

$R^7$ und $R^9$ unabhängig voneinander ein Wasserstoffatom oder eine $-CH_2OH$ Gruppe darstellen,

$R^8$ ein Wasserstoffatom oder eine Gruppe ausgewählt aus $C_1$-$C_3$-Alkyl, $-CH_2OH$, $-(CH_2)_2OH$ und $-CH_2OCH_3$ darstellt,

$R^{10}$ eine Gruppe ausgewählt aus $(H_3C-CH_2)-O-(CH_2)_2-O-$, $(H_3C-CH_2)-O-(CH_2)_2-O-(CH_2)_2-O-$ und $(H_3C-CH_2)-O-(CH_2)_2-O-(CH_2)_2-O-(CH_2)_2-O-$ darstellt,
oder ein Stereoisomer, Tautomer, Hydrat, Solvat oder Salz davon, oder eine Mischung davon.

Der Begriff "$C_1$-$C_2$-Alkyl" bedeutet eine lineare gesättigte, einwertige Kohlenwasserstoffgruppe mit 1 oder 2 Kohlenstoffatomen, z.B. Methyl, Ethyl.
Der Begriff "$C_1$-$C_3$-Alkyl" bedeutet eine lineare oder verzweigte, gesättigte, einwertige Kohlenwasserstoffgruppe mit 1, 2 oder 3 Kohlenstoffatomen, z.B. Methyl, Ethyl, n-Propyl und Isopropyl.
Der Begriff "$C_1$-$C_4$-Alkyl" bedeutet eine lineare oder verzweigte, gesättigte, einwertige Kohlenwasserstoffgruppe mit 1, 2, 3 oder 4 Kohlenstoffatomen, z.B. Methyl, Ethyl, n-Propyl, Isopropyl, n-Butyl, iso-Butyl, sec-Butyl, tert-Butyl.
Der Begriff "$C_2$-$C_4$-Alkyl" bedeutet eine lineare oder verzweigte, gesättigte, einwertige Kohlenwasserstoffgruppe mit 2, 3 oder 4 Kohlenstoffatomen.
Der Begriff "$C_1$-$C_2$-Alkoxy" bedeutet eine lineare gesättigte, einwertige Gruppe der Formel ($C_1$-$C_2$-Alkyl)-0-, in der der Begriff "$C_1$-$C_2$-Alkyl" wie oben definiert ist
Der Begriff "$C_1$-$C_3$-Alkoxy" bedeutet eine lineare oder verzweigte, gesättigte, einwertige Gruppe der Formel ($C_1$-$C_3$-Alkyl)-O-, in der der Begriff "$C_1$-$C_3$-Alkyl" wie oben definiert ist
Der Begriff "$C_2$-$C_4$-Alkoxy" bedeutet eine lineare oder verzweigte, gesättigte, einwertige Gruppe der Formel ($C_2$-$C_4$-Alkyl)-O-, in der der Begriff "$C_2$-$C_4$-Alkyl" wie oben definiert ist, z. B. ein Methoxy, Ethoxy, n-Propoxy oder Isopropoxygruppe.
Der Begriff "$C_2$-$C_5$-Alkoxy" bedeutet eine lineare oder verzweigte, gesättigte, einwertige Gruppe der Formel ($C_2$-$C_5$-Alkyl)-O-, in der der Begriff "$C_2$-$C_5$-Alkyl" wie oben definiert ist.
Der Begriff "$C_3$-$C_5$-Cycloalkyl" bedeutet einen gesättigten, einwertigen, mono- oder bizyklischen Kohlenwasserstoffring, der 3, 4 oder 5 Kohlenstoffatome enthält. Bei besagter "$C_3$-$C_5$-Cycloalkyl"-Gruppe handelt es sich beispielsweise um einen monocyclischen Kohlenwasserstoffring, z.B. eine Cyclopropyl-, Cyclobutyl- oder Cyclopentyl-Gruppe.
Der Begriff "$C_1$-$C_3$-Haloalkyl" bedeutet eine lineare oder verzweigte, gesättigte, einwertige Kohlenwasserstoffgruppe, in der der Begriff "$C_1$-$C_3$-Alkyl" wie oben definiert ist, und in der eines oder mehrere der Wasserstoffatome gleich oder unterschiedlich durch ein Halogenatom ersetzt sind. Vorzugsweise ist das Halogenatom ein Fluoratom. Die genannte "$C_1$-$C_3$-Haloalkyl"-Gruppe ist beispielsweise eine Fluormethyl-, Difluormethyl-, Trifluormethyl-, 2-Fluorethyl-, 2,2-Difluorethyl-, 2,2,2-Trifluorethyl-, Pentafluorethyl-, 3,3,3-Trifluorpropyl- oder 1,3-Difluorpropan2yl-Gruppe.
In einer bevorzugten Ausführungsform der vorliegenden Offenbarung handelt es sich bei der Zusammensetzung um eine Zusammensetzung umfassend (i) ein extrazelluläres Kontrastmittel der Formel

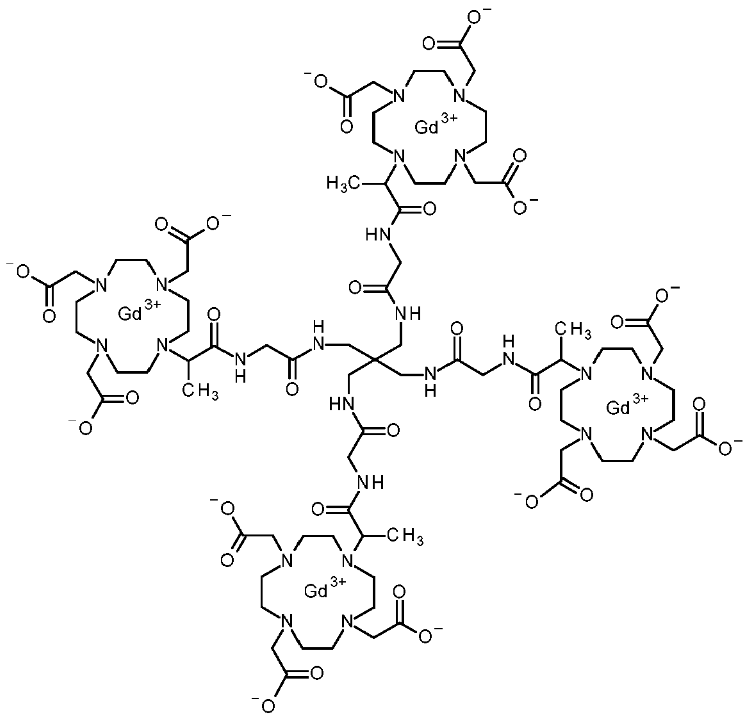

oder ein Stereoisomer, Tautomer, Hydrat, Solvat oder Salz davon, oder eine Mischung davon und (ii) ein hepatobiliäres Kontrastmittel der Formel

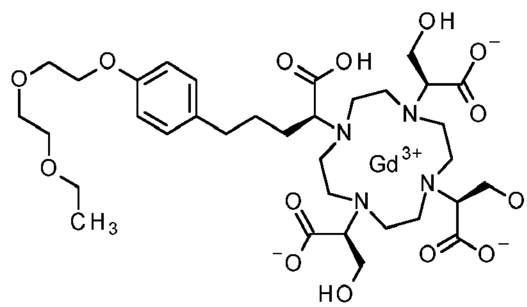

oder ein Stereoisomer, Tautomer, Hydrat, Solvat oder Salz davon, oder eine Mischung davon.

In einer Ausführungsform sind die molaren Mengen an extrazellulärem Kontrastmittel und an hepatobiliärem Kontrastmittel in der Zusammensetzung gleich oder es liegt ein Überschuss an hepatobiliärem Kontrastmittel vor. Somit liegt in einer bevorzugten Ausführungsform das Molverhältnis von extrazellulärem Kontrastmittel zu hepatobiliärem Kontrastmittel im Bereich von 1:1 bis 1:10, vorzugsweise im Bereich von 1:1 bis 1:5, stärker bevorzugt im Bereich von 1:1 bis 1:3.

In einer weiteren Ausführungsform sind die molaren Mengen an extrazellulärem Kontrastmittel und an hepatobiliärem Kontrastmittel gleich oder es wird ein Überschuss an extrazellulärem Kontrastmittel verwendet. Somit liegt in einer bevorzugten Ausführungsform das Molverhältnis von extrazellulärem Kontrastmittel zu hepatobiliärem Kontrastmittel im Bereich von 1:1 bis 10:1, vorzugsweise im Bereich von 1:1 bis 5:1, stärker bevorzugt im Bereich von 1:1 bis 3:1.

Vorzugsweise weist das extrazelluläre Kontrastmittel eine Relaxivität von mehr als 3 $L \cdot mmol^{-1} \cdot s^{-1}$, gemessen bei 1,5 T in Plasma oder Wasser bei 37 °C. Vorzugsweise weist das hepatobiliäre Kontrastmittel eine Relaxivität von mehr als 4 $L \cdot mmol^{-1} \cdot s^{-1}$ auf, gemessen bei 1,5 T in Plasma oder Wasser bei 37 °C.

In einer bevorzugten Ausführungsform der vorliegenden Offenbarung handelt es sich bei der Zusammensetzung um eine Zusammensetzung umfassend (i) ein extrazelluläres Kontrastmittel mit einer Relaxivität von mindestens 3 $L \cdot mmol^{-1} \cdot s^{-1}$, gemessen bei 1,5 T in Plasma oder Wasser bei 37 °C und (ii) ein hepatobiliäres Kontrastmittel mit einer Relaxivität von mindestens 4 $L \cdot mmol^{-1} \cdot s^{-1}$ auf, gemessen bei 1,5 T in Plasma oder Wasser bei 37 °C.

In einem ersten Schritt werden die erste Repräsentation und die zweite Repräsentation empfangen oder erzeugt.

Der Begriff "Empfangen" umfasst sowohl das Abrufen von Repräsentationen als auch das Entgegennehmen von Repräsentationen, die z.B. an das Computersystem der vorliegenden Offenbarung übermittelt werden. Die Repräsentationen können von einem Computertomographen, von einem Magnetresonanztomographen oder von einem Ultraschall-Scanner empfangen werden. Die Repräsentationen können aus einem oder mehreren Datenspeichern ausgelesen und/oder von einem separaten Computersystem übermittelt werden.

Die Repräsentationen können auch wie nachfolgend beschrieben erzeugt werden.

Üblicherweise fallen radiologische Aufnahmen als Ergebnis von radiologischen Untersuchungen (insbesondere im Fall der Computertomografie und der Sonografie) als Repräsentationen im Ortsraum (auch Bildraum genannt) an.

Der "Ortsraum" ist der gewöhnliche dreidimensionale Euklidische Raum, der mit dem Raum übereinstimmt, den wir Menschen mit unseren Sinnen erfahren und in dem wir uns fortbewegen. Eine Repräsentation im Ortsraum ist daher die für Menschen geläufigere Repräsentation.

In einer Ausführungsform der vorliegenden Offenbarung sind die erste Repräsentation und die zweite Repräsentation, die in einem ersten Schritt empfangen oder erzeugt werden, Repräsentationen im Ortsraum.

In einer Repräsentation im Ortsraum, in dieser Beschreibung auch als Ortsraumdarstellung oder Ortsraum-Repräsentation bezeichnet, wird der Untersuchungsbereich üblicherweise durch eine Vielzahl an Bildelementen (Pixel oder Voxel) repräsentiert, die beispielsweise rasterförmig angeordnet sein können, wobei jedes Bildelement einen Teil des Untersuchungsbereichs repräsentiert, wobei jedem Bildelement ein Farbwert oder Grauwert zugeordnet sein kann. Ein in der Radiologie weit verbreitetes Format zur Speicherung und Verarbeitung von Repräsentationen im Ortsraum ist das DICOM-Format. DICOM (Digital Imaging and Communications in Medicine) ist ein offener Standard zur Speicherung und zum Austausch von Informationen im medizinischen Bilddatenmanagement. Andere Formate zur Speicherung, Verarbeitung und/oder Darstellung von Repräsentationen im Ortsraum sind auch möglich.

Es ist möglich, eine Co-Registrierung von Repräsentationen im Ortsraum durchzuführen, bevor sie, wie in dieser Beschreibung beschrieben, verarbeitet werden. Die "Co-Registrierung" (im Stand der Technik auch "Bildregistrierung" genannt) dient dazu, zwei oder mehrere Ortsraumdarstellungen desselben Untersuchungsbereichs bestmöglich in Übereinstimmung miteinander zu bringen. Dabei wird eine der Ortsraumdarstellungen als Referenzbild festgelegt, die andere wird Objektbild genannt. Um diese optimal an das Referenzbild anzupassen, wird eine ausgleichende Transformation berechnet.

In einer Ausführungsform der vorliegenden Offenbarung wird auf Basis der ersten Repräsentation und der zweiten Repräsentation im Ortsraum eine dritte Repräsentation im Ortsraum erzeugt. Eine solche dritte Repräsentation repräsentiert zumindest einen Teil des Untersuchungsbereichs ebenfalls im Ortsraum.

Es ist aber auch möglich, dass die erste Repräsentation und die zweite Repräsentation, die in einem ersten Schritt empfangen oder erzeugt werden, Repräsentationen im Frequenzraum sind. Mit anderen Worten: in einer Ausführungsform repräsentieren die erste Repräsentation und die zweite Repräsentation den Untersuchungsbereich im Frequenzraum.

Der "Frequenzraum" ist ein Bereich (engl.: *domain*), in dem ein Signal als die Summe seiner einzelnen Frequenzkomponenten betrachtet wird.

In einer Repräsentation im Frequenzraum, in dieser Beschreibung auch als Frequenzraumdarstellung oder Frequenzraum-Repräsentation bezeichnet, wird der Untersuchungsbereich durch eine Überlagerung von Grundschwingungen repräsentiert. Beispielsweise kann der Untersuchungsbereich durch eine Summe von Sinus- und/oder Kosinus-Funktionen mit verschiedenen Amplituden, Frequenzen und Phasen repräsentiert werden. Die Amplituden und Phasen können als Funktion der Frequenzen beispielsweise in einer zwei- oder dreidimensionalen Darstellung aufgetragen werden. Üblicherweise wird die niedrigste Frequenz (Ursprung) in das Zentrum gelegt. Je weiter man sich von diesem Zentrum entfernt, desto höher sind die Frequenzen. Jeder Frequenz kann eine Amplitude, mit der die Frequenz in der Frequenzraumdarstellung vertreten ist, und eine Phase, die angibt, inwieweit die jeweilige Schwingung gegenüber einer Sinus- oder Kosinus-Schwingung verschoben ist, zugeordnet werden.

Die Rohdaten, die bei magnetresonanztomografischen Untersuchungen anfallen (so genannte k-Raum-Daten) sind ein Beispiel für eine Repräsentation im Frequenzraum. Solche Rohdaten (k-Raum-Daten) aus magnetresonanztomografischen Untersuchungen können direkt als erste und/oder zweite Repräsentation im Frequenzraum im Sinne der vorliegenden Offenbarung verwendet werden.

Üblicherweise fallen radiologische Aufnahmen als Ergebnis von radiologischen Untersuchungen (insbesondere im Fall der Computertomografie und der Sonografie) als Repräsentationen im Ortsraum (auch Bildraum genannt) an.

Eine Repräsentation im Ortsraum lässt sich beispielsweise durch eine Fourier-Transformation in eine Repräsentation im Frequenzraum überführen (transformieren). Umgekehrt lässt sich eine Repräsentation im Frequenzraum beispielsweise durch eine inverse Fourier-Transformation in eine Repräsentation im Ortsraum überführen (transformieren). Der Begriff "Erzeugen einer Repräsentation" bedeutet daher vorzugsweise, dass aus einer Ortraum-Darstellung des Untersuchungsbereichs durch eine Transformation eine Frequenz-Darstellung des Untersuchungsbereichs erzeugt wird oder dass aus einer Frequenz-Darstellung des Untersuchungsbereichs durch eine Transformation eine Ortraum-Darstellung des Untersuchungsbereichs erzeugt wird.

Details über Ortsraumdarstellungen und Frequenzraumdarstellungen und ihre jeweilige Umwandlung ineinander sind in zahlreichen Publikationen beschrieben, siehe z.B.: https://see.stanford.edu/materials/lsoftaee261/book-fall-07.pdf.

Wenn also die erste Repräsentation und/oder die zweite Repräsentation den Untersuchungsbereich im Ortsraum repräsentieren, dann kann die jeweilige Ortsraum-Repräsentation zunächst durch eine Transformation (z.B. eine Fourier-Transformation) in eine Repräsentation im Frequenzraum überführt (umgewandelt, transformiert). Mit anderen Worten: aus einer Ortsraum-Repräsentation kann durch eine Transformation (z.B. einer Fourier-Transformation) eine Repräsentation im Frequenzraum erzeugt werden.

Es ist auch möglich, eine Co-Registrierung von Repräsentationen im Frequenzraum durchzuführen, wobei hierbei zu beachten ist, dass sich eine Translation im Ortsraum als eine additive lineare Phasenrampe im Frequenzraum darstellt. Skalierung und Rotation hingegen bleiben bei der Fourier- und inversen Fourier-Transformation erhalten - eine Skalierung und Rotation im Frequenzraum ist auch eine Skalierung und Rotation im Ortsraum (siehe z.B.: S. Skare: Rigid Body Image Realignment in Image Space vs. k-Space, ISMRM SCIENTIFIC WORKSHOP on Motion Correction, 2014, https://cds.ismrm.org/protected/Motion_14/Program/Syllabus/Skare.pdf).

Es sei angemerkt, dass die Co-Registrierung im Frequenzraum nicht sehr präzise sein muss, da hohe Frequenzen, welche Bilddetails und somit Ungenauigkeiten in der Registrierung abbilden, durch den Frequenzfilter abgeschwächt werden. Dies ist ein Vorteil des in dieser Offenbarung beschriebenen Ansatzes gegenüber Ansätzen, bei denen Operationen im Ortsraum ausgeführt werden.

In einer bevorzugten Ausführungsform der vorliegenden Offenbarung sind die erste Repräsentation und die zweite Repräsentation, die in einem ersten Schritt empfangen oder erzeugt werden, Repräsentationen im Frequenzraum.

In einer Ausführungsform der vorliegenden Offenbarung wird auf Basis der ersten Repräsentation im Frequenzraum und der zweiten Repräsentation im Frequenzraum eine dritte Repräsentation im Frequenzraum erzeugt. Eine solche dritte Repräsentation repräsentiert zumindest einen Teil des Untersuchungsbereichs ebenfalls im Frequenzraum.

Unabhängig davon, ob die dritte Repräsentation zumindest einen Teil des Untersuchungsbereichs im Ortsraum oder im Frequenzraum repräsentiert, repräsentiert die dritte Repräsentation die durch die zweite Menge an Kontrastmittel im Untersuchungsbereich hervorgerufene Signalverstärkung. Mit anderen Worten: die dritte Repräsentation umfasst die Unterschiede in der zweiten Repräsentation gegenüber der ersten Repräsentation, die durch die zweite Menge an Kontrastmittel hervorgerufen werden. In der dritten Repräsentation im Frequenzraum ist jede Frequenz mit einem umso höheren Amplitudenwert vertreten, je stärker die Frequenz von der zweiten Menge an Kontrastmittel beeinflusst wird. Wird die dritte Repräsentation im Frequenzraum - und nicht im Ortsraum - erzeugt, können niedrige Frequenzen gewichtet und damit der Kontrast einer vierten Repräsentation im Ortsraum hervorgehoben werden.

In einer bevorzugten Ausführungsform umfasst das Erzeugen der dritten Repräsentation ein Subtrahieren der ersten Repräsentation von der zweiten Repräsentation. Mit anderen Worten: in einer bevorzugten Ausführungsform ist die dritte Repräsentation die Differenz der ersten und der zweiten Repräsentation.

Ist die dritte Repräsentation eine Repräsentation des Untersuchungsbereichs im Frequenzraum kann in einem weiteren Schritt eine gewichtete dritte Repräsentation auf Basis der dritten Repräsentation erzeugt werden. Durch die Gewichtung der dritten Repräsentation werden Frequenzen, die einen höheren Beitrag zum Kontrast leisten, mit einem höheren Gewicht versehen als Frequenzen, die einen geringeren Beitrag zum Kontrast leisten. Dabei bezieht sich der Ausdruck "Kontrast" auf die zur Frequenzraum-Darstellung korrespondierende Ortsraumdarstellung. Kontrastinformationen werden in einer Frequenzraumdarstellung durch niedrige Frequenzen repräsentiert, während die höheren Frequenzen Informationen zu Feinstrukturen repräsentieren. Bildrauschen ist typischerweise in der Frequenzdarstellung gleichverteilt. Die gewichtete dritte Repräsentation kann also durch Anwenden einer frequenzabhängigen Gewichtsfunktion auf die dritte Repräsentation erzeugt werden, wobei niedrige Frequenzen höher gewichtet werden als hohe Frequenzen. Die frequenzabhängige Gewichtsfunktion hat die Wirkung eines Filters. Der Filter erhöht das Signal-zu-Rauschen-Verhältnis, da die spektrale Rauschdichte für hohe Frequenzen verringert wird.

Die Gewichtung der dritten Frequenzraum-Repräsentation hat also verschiedene Vorteile: zum einen wird ein Fokus auf die Kontrastinformationen gelegt, d.h., es werden Merkmale in der resultierenden vierten Frequenzraum-Repräsentation hervorgehoben, die auf eine Kontraststeigerung durch die zweite Menge an Kontrastmittel zurückzuführen sind; zum anderen ist es möglich, die gewichtete dritte Frequenzraum-Repräsentation mehrfach zu der dritten Frequenzraum-Repräsentation zu addieren, um eine weitere Kontrasterhöhung zu erreichen, ohne dass Störungen und/oder Rauschen im selben Maße verstärkt werden wie der Kontrast.

Fig. 1 zeigt Beispiele für frequenzabhängige Gewichtsfunktionen, die zur Gewichtung der dritten Repräsentation verwendet werden können. Die Gewichtsfunktionen sind der Einfachheit halber als zweidimensionale Graphen dargestellt, bei denen die Gewichtsfaktoren wf (Ordinate) als Funktion der Frequenz *f* (Abszisse) aufgetragen sind.

Fig. 1 (a) zeigt eine Gewichtsfunktion, bei der die Gewichtsfaktoren vom Zentrum mit zunehmender Frequenz exponentiell absinken.

Fig. 1 (b) zeigt eine Gewichtsfunktion, bei der die Gewichtsfaktoren vom Zentrum mit zunehmender Frequenz linear absinken.

Fig. 1 (c) zeigt eine Gewichtsfunktion, bei der die Gewichtsfaktoren vom Zentrum mit zunehmender Frequenz in Form einer umgekehrten Parabel absinken.

Fig. 1 (d) zeigt eine Gewichtsfunktion, bei der die Gewichtsfaktoren über einen definierten Bereich um das Zentrum herum konstant sind und dann ab einer Schwellenfrequenz exponentiell absinken.

Fig. 1 (e) zeigt eine Gewichtsfunktion, bei der die Gewichtsfaktoren in Form einer Kosinusfunktion um das Zentrum herum verlaufen.

Fig. 1 (f) zeigt eine Gewichtsfunktion, bei der die Gewichtsfaktoren in Form einer Treppenfunktion um das Zentrum herum verlaufen.

Fig. 1 (g) zeigt eine Gewichtsfunktion, bei der die Gewichtsfaktoren in Form einer Gauß-Normalverteilungsfunktion um das Zentrum herum verlaufen.

Fig. 1 (h) zeigt eine Gewichtsfunktion, bei der die Gewichtsfaktoren in Form einer Hann-Funktion um das Zentrum herum verlaufen.

Kombinationen der gezeigten Gewichtsfunktionen und weitere/andere Gewichtsfunktionen sind möglich. Beispiele für weitere Gewichtsfunktionen sind zum Beispiel zu finden unter https://de.wikipedia.org/wiki/Fensterfunktion#Beispiele_von_Fensterfunktionen; F.J. Harris et al.: On the Use of Windows for Harmonic Analysis with the Discrete Fourier Transform, Proceedings oft he IEEE, VoL. 66, N. 1, 1978; https://docs.scipy.org/doc/scipy/reference/signal.windows.html; K. M. M Prabhu: Window Functions and Their Applications in Signal Processing, CRC Press, 2014, 978-1-4665-1583-3).

Gewichtsfunktionen, die verwendet werden können, werden in der Literatur auch als Fensterfunktionen bezeichnet.

Bevorzugt werden Gewichtungsfunktionen verwendet, die sich in der MR Bildgebung und Spektroskopie zur Gewichtung von k-Raum-Daten bewährt haben, wie z.B. Gauß-Funktion oder die Hann-Funktion (auch als Hann Window bezeichnet, siehe z.B.: *Hanning Window,* siehe z.B. R. Pohmann et al.: Accurate phosphorus metabolite images of the human heart by 3D acquisition-weighted CSI, Magnetic Resonance in Medicine: An Official Journal of the International Society for Magnetic Resonance in Medicine 45.5 (2001): 817-826). Eine weitere bevorzugte Gewichtsfunktion ist die Poisson-Funktion (Poisson Window).

In einem weiteren Schritt wird eine vierte Repräsentation durch Kombinieren der ersten Repräsentation mit der dritten Repräsentation erzeugt. Die dritte Repräsentation kann eine dritte Repräsentation im Ortsraum, eine dritte Repräsentation im Frequenzraum oder eine gewichtete dritte Repräsentation im Frequenzraum sein. Durch eine solche Kombination werden Informationen zu der Kontrastverstärkung, die durch die zweite Menge des Kontrastmittels im Untersuchungsbereich hervorgerufen wird, auf die erste Repräsentation übertragen.

Die Kombination zur Erzeugung der vierten Repräsentation kann beispielsweise eine Addition der ersten Repräsentation und der dritten Repräsentation (oder der gewichteten dritten Repräsentation) sein oder umfassen. Es ist aber auch möglich, eine multiplikative Kombination oder eine nicht-lineare Kombination durchzuführen. In einer bevorzugten Ausführungsform der vorliegenden Offenbarung ist oder umfasst die Erzeugung einer vierten Repräsentation durch Kombinieren der ersten Repräsentation mit der (gewichteten) dritten Repräsentation ein $\alpha$-faches Addieren der (gewichteten) dritten Repräsentation zu der ersten Repräsentation, wobei $\alpha$ (Verstärkungsfaktor) eine positive oder negative reelle Zahl ist und wobei die dritte Repräsentation eine dritte Repräsentation im Ortsraum, eine dritte Repräsentation im Frequenzraum oder eine gewichtete dritte Repräsentation im Frequenzraum sein kann. Mit anderen Worten: die (gewichtete) dritte Repräsentation wird mit einem Verstärkungsfaktor $\alpha$ multipliziert und das Ergebnis der Multiplikation zu der ersten Repräsentation addiert.

In einer bevorzugten Ausführungsform der vorliegenden Offenbarung wird die vierte Repräsentation (i) durch Addition einer mit einem Verstärkungsfaktor $\alpha$ multiplizierten dritten Repräsentation im Ortsraum zu der ersten Repräsentation im Ortsraum (ii) durch Addition einer mit einem Verstärkungsfaktor $\alpha$ multiplizierten dritten Repräsentation im Frequenzraum zu der ersten Repräsentation im Frequenzraum oder (iii) durch Addition einer mit einem Verstärkungsfaktor $\alpha$ multiplizierten gewichteten dritten Repräsentation im Frequenzraum mit der ersten Repräsentation im Frequenzraum erzeugt oder erstellt. Die mathematischen Methoden (Subtrahieren, Addieren, Multiplizieren) betreffen dabei üblicherweise die Tonwerte der einzelnen Bildelemente (Pixel, Voxel) oder die Amplitudenwerte der einzelnen Frequenzen (im Fall von Frequenzraum-Darstellungen).

Der Verstärkungsfaktor ist eine positive oder negative reelle Zahl.

Der Verstärkungsfaktor gibt an, in welchem Maß der Kontrast in der vierten Repräsentation erhöht oder erniedrigt wird.

Das bedeutet, dass die dritte (gewichtete) Repräsentation auch mehrfach zu der ersten Repräsentation addiert werden kann, um einen höheren Kontrast zu erzeugen als die zweite Repräsentation im Ortsraum zeigt.

Es ist durch die Wahl des Verstärkungsfaktors $\alpha$ ferner möglich, eine Verstärkung zu erzielen, die größer ist als die durch eine Standardmenge an Kontrastmittel hervorgerufene Kontrastverstärkung. Eine solche Kontrastverstärkung ist mit dem in WO2019/074938A1 beschriebenen Verfahren nicht möglich, ohne dass man zur Erzeugung der Trainingsdaten Personen eine Menge an Kontrastmittel appliziert, die höher als die Standardmenge ist und damit außerhalb des von der Zulassungsbehörde zugelassenen Bereichs liegt.

Es ist auch möglich, einen Verstärkungsfaktor $\alpha$ zu wählen, der kleiner als 1 ist, d.h. der Kontrast zwischen

Bereichen mit Kontrastmittel und Bereichen ohne Kontrastmittel ist dann in der vierten Repräsentation geringer als in der zweiten Repräsentation.

Es ist auch möglich, den Kontrast durch negative Werte des Verstärkungsfaktors $\alpha$ weiter zu verringern. Dies kann zum Beispiel nützlich sein, um auf Basis einer ersten Repräsentation, die den Untersuchungsbereich mit einer ersten Menge der Zusammensetzung repräsentiert, und einer zweiten Repräsentation, die den Untersuchungsbereich mit einer zweiten Menge der Zusammensetzung repräsentiert, eine Repräsentation des Untersuchungsbereichs ohne Kontrastmittel zu erzeugen. Ist die zweite Menge beispielsweise doppelt so groß wie die erste Menge, ergibt sich bei einem Verstärkungsfaktor von $\alpha$ =-1 eine vierte Repräsentation, die so aussieht als ob kein Kontrastmittel appliziert worden wäre, vorausgesetzt, die durch die Kontrastmittel hervorgerufenen Signalverstärkungen steigen linear mit ihrer Menge an und die erste und die zweite Repräsentation repräsentieren den Untersuchungsbereich in gleichem zeitlichen Abstand zu der Applikation der ersten bzw. zweiten Menge.

Es ist auch möglich negative Werte von $\alpha$ so zu wählen, dass Bereiche des Untersuchungsbereichs, die eine Kontrastmittel-induzierte Signal-Verstärkung in der messtechnisch erzeugten Repräsentation erfahren, in den künstlich erzeugten Repräsentationen komplett dunkel (schwarz) sind.

Der Verstärkungsfaktor kann von einem Nutzer gewählt werden, d.h. variabel sein, oder vordefiniert sein, d.h. vorgegeben sein.

Es ist auch möglich, den Verstärkungsfaktor automatisch zu ermitteln. Es ist z.B. möglich, in einer Ortsraumdarstellung der ersten und/oder der zweiten Repräsentation mindestens einen Bereich zu definieren und/oder von einem Nutzer auswählen zu lassen und den Verstärkungsfaktor so einzustellen, dass ein Grauwert in der Ortsraumdarstellung (oder ein anderer Tonwert im Falle einer anderen Darstellung als einer Grauwertdarstellung) einen definierten Wert annimmt und/oder oberhalb oder unterhalb eines Schwellenwerts liegt und/oder zwei Grauwerte in zwei verschiedenen ausgewählten oder definierten Bereichen einen definierten Abstand voneinander haben und/oder einen Abstand voneinander aufweisen, der oberhalb oder unterhalb eines Schwellenwerts liegt. Es ist auch möglich, andere Kriterien anzuwenden, um den Verstärkungsfaktor automatisch zu ermitteln. Grundlage für die Kriterien zur automatischen Ermittlung des Verstärkungsfaktor kann beispielsweise das Histogramm der in eine Ortsraumdarstellung transformierten ersten, zweiten, dritten, gewichteten dritten und/oder vierten Repräsentation sein. In einem solchen Histogramm können die Zahl der Bildelemente mit einem definierten Tonwert oder Grauwert aufgeführt sein.

Ist die vierte Repräsentation eine Repräsentation des Untersuchungsbereichs im Ortsraum, kann diese ausgegeben, d.h. auf einem Bildschirm angezeigt, mit Hilfe eines Druckers ausgedruckt und/oder auf einem Datenspeicher gespeichert werden. Sie kann auch an ein anderes Computersystem (z.B. über ein Netzwerk) übermittelt werden.

Ist die vierte Repräsentation eine Repräsentation des Untersuchungsbereichs im Frequenzraum, kann die Frequenzraum-Repräsentation in eine Ortsraum-Repräsentation transformiert werden (z.B. mittels einer inversen Fourier-Transformation). Die Ortsraum-Repräsentation kann dann ausgegeben, d.h. auf einem Bildschirm angezeigt, mit Hilfe eines Druckers ausgedruckt und/oder auf einem Datenspeicher gespeichert werden. Sie kann auch an ein anderes Computersystem (z.B. über ein Netzwerk) übermittelt werden.

Fig. 2 zeigt die Erzeugung einer dritten Repräsentation im Ortsraum und einer vierten Repräsentation im Ortsraum auf Basis einer ersten Repräsentation im Ortsraum und einer zweiten Repräsentation im Ortsraum schematisch in Form eines Beispiels.

Fig. 2 zeigt einen Untersuchungsbereich eines Untersuchungsobjekts in Form von verschiedenen Repräsentationen. Der in Fig. 2 gezeigte Untersuchungsbereich umfasst die Leber eines Schweins.

Eine erste Repräsentation R1 repräsentiert den Untersuchungsbereich im Ortsraum ohne Kontrastmittel. Die erste Repräsentation R1 ist eine magnetresonanztomografische Aufnahme.

Eine zweite Repräsentation R2 repräsentiert denselben Untersuchungsbereich desselben Untersuchungsobjekts wie die erste Repräsentation R1 ebenfalls im Ortsraum. Die zweite Repräsentation R2 ist ebenfalls eine magnetresonanztomografische Aufnahme.

Die zweite Repräsentation R2 repräsentiert den Untersuchungsbereich nach der Applikation einer Menge einer Zusammensetzung umfassend ein extrazelluläres Kontrastmittel und ein intrazelluläres Kontrastmittel. Das intrazelluläre Kontrastmittel ist ein hepatobiliäres Kontrastmittel. Die Zusammensetzung umfasst 10 $\mu$mol pro kg Körpergewicht des extrazellulären Kontrastmittels und 10 $\mu$mol pro kg Körpergewicht des intrazellulären Kontrastmittels. Die Zusammensetzung wurde dem Untersuchungsobjekt intravenös appliziert. Die zweite Repräsentation R2 repräsentiert den Untersuchungsbereich in der so genannten portalvenösen Phase nach der Applikation des Kontrastmittels.

Auf Basis der ersten Repräsentation R1 und der zweiten Repräsentation R2 wird eine dritte Repräsentation R3 erzeugt. In dem in Fig. 2 gezeigten Beispiel ist die dritte Repräsentation R3 die Differenz der zweiten Repräsentation R2 und der ersten Repräsentation R1.

In der dritten Repräsentation R3 können negative Tonwerte, die bei der Subtraktion der ersten Repräsentation von der zweiten Repräsentation entstehen können, auf Null (oder einen anderen Wert) gesetzt werden, um negative Werte zu vermeiden.

Die dritte Repräsentation R3 repräsentiert die durch die zweite Menge des Kontrastmittels im Untersuchungsbereich hervorgerufene Kontrastverstärkung.

Die dritte Repräsentation R3 wird mit dem Verstärkungsfaktor $\alpha$ multipliziert und das Ergebnis der Multiplikation zu der ersten Repräsentation R1 addiert. Auf diese Weise wird eine vierte Repräsentation R4 erzeugt. In dem in Fig. 2 gezeigten Beispiel beträgt der Verstärkungsfaktor $\alpha$=3, d.h. die dritte Repräsentation R3 wird dreimal zu der ersten Repräsentation R1 addiert.

Die vierte Repräsentation R4 kann einer Normalisierung unterzogen werden, das heißt, die Tonwerte können mit einem Faktor multipliziert werden, so dass der Tonwert mit dem höchsten Wert beispielsweise durch den Farbton weiß und der Tonwert mit dem geringsten Wert beispielsweise durch den Farbton schwarz repräsentiert wird.

Fig. 3 zeigt die Erzeugung einer dritten Repräsentation im Frequenzraum und einer vierten Repräsentation im Frequenzraum auf Basis einer ersten Repräsentation im Frequenzraum und einer zweiten Repräsentation im Frequenzraum schematisch in Form eines Beispiels.

Fig. 3 zeigt einen Untersuchungsbereich eines Untersuchungsobjekts in Form von verschiedenen Repräsentationen. Der in Fig. 3 gezeigte Untersuchungsbereich umfasst eine Leber eines Schweines.

Eine erste Repräsentation $R1^I$ repräsentiert den Untersuchungsbereich im Ortsraum ohne Kontrastmittel. Die erste Repräsentation $R1^I$ ist eine magnetresonanztomografische Aufnahme.

Die erste Ortsraum-Repräsentation $R1^I$ lässt sich durch eine Transformation T, zum Beispiel einer Fourier-Transformation, in eine erste Repräsentation $R1^F$ des Untersuchungsbereich im Frequenzraum umwandeln. Die erste Frequenzraum-Repräsentation $R1^F$ repräsentiert denselben Untersuchungsbereich desselben Untersuchungsobjekts wie die erste Ortsraum-Repräsentation $R1^I$ ebenfalls ohne Kontrastmittel.

Die erste Frequenzraum-Repräsentation $R1^F$ lässt sich mittels einer inversen Transformation $T^{-1}$ in die erste Ortsraum-Repräsentation $R1^I$ umwandeln. Die inverse Transformation $T^{-1}$ ist die zur Transformation T inverse Transformation.

Eine zweite Repräsentation $R2^I$ repräsentiert denselben Untersuchungsbereich desselben Untersuchungsobjekts wie die erste Repräsentation $R1^I$ im Ortsraum. Die zweite Repräsentation $R2^I$ ist ebenfalls eine magnetresonanztomografische Aufnahme. Die zweite Ortsraum-Repräsentation $R2^I$ repräsentiert den Untersuchungsbereich nach der Applikation einer Menge einer Zusammensetzung umfassend ein extrazelluläres Kontrastmittel und ein intrazelluläres Kontrastmittel. Das intrazelluläre Kontrastmittel ist ein hepatobiliäres Kontrastmittel. Dem Untersuchungsobjekt wurde die Zusammensetzung intravenös appliziert. Die Zusammensetzung umfasste 10 $\mu$mol pro kg Körpergewicht des extrazellulären Kontrastmittels und 10 $\mu$mol pro kg Körpergewicht des hepatobiliären Kontrastmittels. Die zweite Repräsentation $R2^I$ repräsentiert den Untersuchungsbereich 15 Minuten nach der Injektion der Zusammensetzung in der so genannten hepatobiliären Phase. In der zweiten Ortsraum-Repräsentation $R2^I$ ist der Kontrast zwischen dem Lebergewebe und dem umliegenden Gewebe infolge der applizierten Menge der Zusammensetzung erhöht.

Die zweite Ortsraum-Repräsentation $R2^I$ lässt sich durch die Transformation T in eine zweite Repräsentation $R2^F$ des Untersuchungsbereichs im Frequenzraum umwandeln. Die zweite Frequenzraum-Repräsentation $R2^F$ repräsentiert denselben Untersuchungsbereich desselben Untersuchungsobjekts wie die zweite Ortsraum-Repräsentation $R2^I$, ebenfalls nach der Applikation der Zusammensetzung.

Die zweite Frequenzraum-Repräsentation $R2^F$ lässt sich mittels der inversen Transformation $T^{-1}$ in die zweite Ortsraum-Repräsentation $R2^I$ umwandeln.

Auf Basis der ersten Frequenzraum-Repräsentation $R1^F$ und der zweiten Frequenzraum-Repräsentation $R2^F$ wird eine dritte Frequenzraum-Repräsentation $R3^F$ erzeugt. In dem in Fig. 3 gezeigten Beispiel ist die dritte Frequenzraum-Repräsentation $R3^F$ die Differenz der zweiten Frequenzraum-Repräsentation $R2^F$ und der ersten Frequenzraum-Repräsentation $R1^F$ ($R3^F = R2^F - R1^F$).

Die dritte Frequenzraum-Repräsentation $R3^F$ kann einer Normalisierung unterzogen werden, das heißt, die Amplitudenwerte können mit einem Faktor multipliziert werden, so dass die Amplitude mit dem höchsten Wert beispielsweise durch den Farbton weiß und die Amplitude mit dem geringsten Wert beispielsweise durch den Farbton schwarz repräsentiert wird.

Es ist auch möglich, dass in einer solchen Normalisierung negative Werte, die bei der Subtraktion der ersten Repräsentation von der zweiten Repräsentation entstehen können, auf null (oder einen anderen Wert) gesetzt werden, um negative Werte zu vermeiden. In Fig. 3 sind alle Frequenzraumdarstellungen auf derselben logarithmischen Graustufenskala dargestellt.

Die dritte Frequenzraum-Repräsentation $R3^F$ repräsentiert die durch die applizierte Menge der Zusammensetzung im Untersuchungsbereich hervorgerufene Kontrastverstärkung.

In Fig. 3 ist ferner dargestellt, dass auf die dritte Frequenzraum-Repräsentation $R3^F$ eine Gewichtsfunktion WF angewendet wird, um eine gewichtete dritte Repräsentation $R3^{F,w}$ zu erzeugen. Die Gewichtsfunktion ist im vorliegenden Fall eine Gaußsche Gewichtsfunktion.

Durch die Gewichtung der dritten Repräsentation $R3^F$ werden Frequenzen, die einen höheren Beitrag zum Kontrast leisten, mit einem höheren Gewicht versehen als Frequenzen, die einen geringeren Beitrag zum Kontrast leisten. Dabei bezieht sich der Ausdruck "Kontrast" auf die zur Frequenzraum-Darstellung korrespondierende Ortsraumdarstellung. Kontrastinformationen werden in einer Frequenzraumdarstellung durch niedrige Frequenzen repräsentiert, während die höheren Frequenzen Informationen zu Feinstrukturen repräsentieren. Bildrauschen ist typischerweise in der Frequenzdarstellung gleichverteilt. Die gewichtete dritte Repräsentation im Frequenzraum kann also durch Anwenden einer frequenzabhängigen Gewichtsfunktion auf die dritte Repräsentation im Frequenzraum erzeugt werden, wobei niedrige Frequenzen höher gewichtet werden als hohe Frequenzen. Die frequenzabhängige Gewichtsfunktion hat die Wirkung eines Filters. Der Filter erhöht das Signal-zu-Rauschen-Verhältnis, da die spektrale Rauschdichte für hohe Frequenzen verringert wird.

Zur Erzeugung der gewichteten dritten Repräsentation $R3^{F,w}$ werden die Amplitudenwerte der dritten Frequenzraum-Repräsentation $R3^F$ mit den Gewichtsfaktoren der Gewichtsfunktion multipliziert. Die Gewichtsfaktoren sind frequenzabhängig, d.h. die Gewichtsfaktoren sind eine Funktion der Frequenz. Aus Gründen der Veranschaulichung ist die Gewichtsfunktion WF in Fig. 1 in zweidimensionaler Form dargestellt. Die Gewichtsfunktion WF zeigt die Gewichtsfaktoren *wf* als Funktion der Frequenz entlang einer Dimension.

Durch die Gewichtsfunktion WF werden die Amplituden von niedrigen Frequenzen (die Frequenzen nehmen in dem gezeigten Beispiel vom Zentrum der Repräsentation $R3^F$ nach außen zu) mit einem höheren Gewichtsfaktor multipliziert als die Amplituden von höheren Frequenzen (die weiter vom Zentrum der Repräsentation $R3^F$ entfernt sind); d.h. die niedrigen Frequenzen werden höher gewichtet als die höheren Frequenzen. Dies ist in der gewichteten Repräsentation $R3^{F,w}$ daran zu erkennen, dass Grauwerte zu den Rändern der Repräsentation dunkler sind als im Fall der Repräsentation $R3^F$ und die Helligkeit insgesamt vom Zentrum nach außen schneller absinkt als bei der Repräsentation $R3^F$.

In Fig. 3 ist ferner dargestellt, dass eine vierte Repräsentation $R4^F$ des Untersuchungsbereichs des Untersuchungsobjekts im Frequenzraum durch die Kombination ersten Frequenzraum-Repräsentation $R1^F$ mit gewichteten dritten Frequenzraum-Repräsentation $R3^{F,w}$ erzeugt wird. Die Kombination erfolgt in dem Beispiel durch Multiplizieren der gewichteten dritten Frequenzraum-Repräsentation $R3^{F,w}$ mit einem Verstärkungsfaktor $\alpha$ und Addieren des Ergebnisses zur der ersten Frequenzraum-Repräsentation $R1^F$. In dem in Fig. 3 gezeigten Beispiel beträgt der Verstärkungsfaktor $\alpha$=3, d.h. die gewichtete dritte Frequenzraum-Repräsentation $R3^{F,w}$ wird dreimal zu der ersten Frequenzraum-Repräsentation $R1^F$ addiert.

Es ist möglich, die vierte Repräsentation $R4^F$ einer Normalisierung zu unterziehen.

In Fig. 3 ist ferner dargestellt, dass die vierte Repräsentation $R4^F$ des Untersuchungsbereichs des Untersuchungsobjekts im Frequenzraum durch eine Transformation in eine Repräsentation $R4^I$ des Untersuchungsbereichs des Untersuchungsobjekts im Ortsraum umgewandelt wird.

Fig. 4 zeigt beispielhaft und schematisch verschiedene Repräsentationen eines Untersuchungsbereichs eines Untersuchungsobjekts im Ortsraum. Die Repräsentationen unterscheiden sich durch den Verstärkungsfaktor a, der in den vorliegenden Beispielen die Werte 0, 1, 2 ,3 und 4 annehmen kann. Die Repräsentationen wurden in einem Verfahren, wie es in Bezug zu Fig. 3 beschrieben wurde, erzeugt. Das bedeutet, dass die Subtraktion und Addition im Frequenzraum vorgenommen wurden und eine Gewichtung vorgenommen wurde.

Ein Verstärkungsfaktor von $\alpha$ = 0 bedeutet, dass bei der ersten Repräsentation keine Kontrastverstärkung vorgenommen wird. Die Repräsentation zeigt also die ursprüngliche erste Repräsentation im Ortsraum.

Ein Verstärkungsfaktor von $\alpha$ = 1 bedeutet, dass zu der ersten Repräsentation im Frequenzraum die gewichtete dritte Frequenzraum-Repräsentation einmal addiert wird. Die Kontrastverstärkung ist ähnlich zu der Kontrastverstärkung der korrespondierenden zweiten Ortsraum-Repräsentation, weist aber aufgrund der vorgenommenen stärkeren Gewichtung der niedrigen Frequenzen weniger Rauschen/Störungen auf.

Ein Verstärkungsfaktor von $\alpha$ = 2, 3 oder 4 bedeutet, dass zu der ersten Repräsentation im Frequenzraum die gewichtete dritte Frequenzraum-Repräsentation 2-mal, 3-mal oder 4-mal addiert wird. Die Kontrastverstärkung steigt mit zunehmendem Verstärkungsfaktor an.

In dem in Fig. 4 gezeigten Beispiel wird stets ein ganzzahliges Vielfaches der gewichteten dritten Frequenzraum-Repräsentation zu der ersten Repräsentation addiert. Wie beschrieben ist es auch möglich, einen nichtganzzahligen Anteil der gewichteten dritten Frequenzraum-Repräsentation zu der ersten Repräsentation zu addieren (z.B. $\alpha$ = 1,5 oder $\alpha$ = 3,7 oder $\alpha$ = 4,159). Somit kann eine Verstärkung kontinuierlich gesteigert werden.

Fig. 5 zeigt eine bevorzugte Ausführungsform einer Ausgabe der künstlichen kontrastverstärkten radiologischen Aufnahme eines Untersuchungsbereichs mittels eines Computersystems/Computerprogramms. Die Ausgabe erfolgt gegenüber einem Nutzer des Computersystems und/oder Computerprogramms der vorliegenden Offenbarung.

Dem Nutzer werden eine erste Repräsentation $R1^I$ eines Untersuchungsbereichs eines Untersuchungsobjekts, eine zweite Repräsentation $R2^I$ des Untersuchungsbereichs des Untersuchungsobjekts und eine vorhersagte vierte Repräsentation $R4^I$ des Untersuchungsbereichs des Untersuchungsobjekts angezeigt (zum Beispiel auf einem Monitor).

Die erste Repräsentation $R1^I$ repräsentiert den Untersuchungsbereich ohne Kontrastmittel oder nach der Applikation einer ersten Menge einer Zusammensetzung umfassend (i) ein extrazelluläres Kontrastmittel und (ii) ein intrazelluläres Kontrastmittel.

Die zweite Repräsentation $R2^I$ repräsentiert den Untersuchungsbereich nach der Applikation einer zweiten

Menge der Zusammensetzung. Die zweite Menge ist größer als die erste Menge.

Die vierte Repräsentation $R4^I$ repräsentiert den Untersuchungsbereich mit einem verstärkten Kontrast. Der Kontrast zwischen Bereichen ohne Kontrastmittel und Bereichen mit Kontrastmittel ist im Fall der vierten Repräsentation $R4^I$ größer als bei der zweiten Repräsentation $R2^I$.

Die vierte Repräsentation $R4^I$ wurde wie in Bezug zu Fig. 3 beschrieben erzeugt.

Alle angezeigten Repräsentationen sind Repräsentationen des Untersuchungsbereichs im Ortsraum. In dem in Fig. 5 gezeigten Beispiel werden dem Nutzer keine Frequenzraum-Repräsentationen angezeigt. Dies ist üblicherweise auch nicht vorgesehen, da viele Nutzer mit Frequenzraum-Repräsentation nicht vertraut sind.

Unterhalb der angezeigten Repräsentationen $R1^I$ $R2^I$ und $R4^I$ werden dem Nutzer die Histogramme der Repräsentationen in einer überlagerten Darstellung angezeigt.

Oberhalb der angezeigten Repräsentationen $R1^I$ $R2^I$ und $R4^I$ werden dem Nutzer drei virtuelle Schieberegler zur Verfügung gestellt, mit denen der Nutzer Einstellungen vornehmen kann. Mit einem ersten Schieberegler $\alpha$ kann der Nutzer den Verstärkungsfaktor im Bereich von 1 bis 10 beliebig wählen. Der Schieberegler zeigt an, dass eine kontinuierliche Anhebung des Verstärkungsfaktor von 1 auf 10 möglich ist.

Mit einem zweiten Schieberegler $\beta$ und einem dritten Schieberegler $\gamma$ kann der Nutzer Parameter der Gewichtungsfunktion ändern. Diese Parameter können beispielsweise bestimmen, wie stark die Gewichtsfaktoren mit zunehmender Frequenz abnehmen.

Die in Fig. 5 gezeigte Ausgabe ist vorzugsweise so konfiguriert, dass die Anzeige der vierten Repräsentation $R4^I$ unmittelbar aktualisiert wird, wenn der Nutzer Änderungen mittels eines der Schieberegler vornimmt. Der Nutzer kann dann beispielsweise den Verstärkungsfaktor $\alpha$ ändern und unmittelbar sehen, wie sich eine Änderung des Verstärkungsfaktors auf die Repräsentation $R4^I$ auswirkt. So kann er diejenigen Einstellungen identifizieren, die zu einer für den Nutzer optimalen vierten Repräsentation $R4^I$ des Untersuchungsbereichs führen.

Jede Änderung eines der Parameter $\alpha$, $\beta$ und/oder $\gamma$ führt bei dem Computersystem dazu, dass auf Basis des/der geänderten Parameter(s) die vierte Repräsentation $R4^I$ jeweils nur im Hintergrund berechnet und angezeigt wird. Dies gilt analog auch für das Histogramm der vierte Repräsentation $R4^I$.

Es ist möglich, dass durch die Kontrastverstärkung im Frequenzraum gemäß der bisherigen vorliegenden Offenbarung eine von einem Nutzer unerwünschte Kontrastverstärkung hervorgerufen wird. Dies sei an einem Beispiel erläutert. Das Beispiel ist schematisch in Fig. 6 gezeigt.

Fig. 6 zeigt eine erste Repräsentation $R1^I$ und eine zweite Repräsentation $R2^I$ eines Untersuchungsbereichs eines Untersuchungsobjekts. Der Untersuchungsbereich umfasst die Leber L und die Gallenblase B eines Schweines. Die erste Repräsentation $R1^I$ repräsentiert den Untersuchungsbereich ohne Kontrastmittel im Ortsraum. Die zweite Repräsentation $R2^I$ repräsentiert den Untersuchungsbereich nach der Applikation der Zusammensetzung umfassend ein extrazelluläres Kontrastmittel und ein intrazelluläres Kontrastmittel im Ortsraum. In der zweiten Repräsentation $R2^I$ ist zu erkennen, dass sich die Gallenblase teilweise gefüllt hat, beispielsweise mit einer Flüssigkeit umfassend ein oder beide Kontrastmittel oder einer anderen Flüssigkeit, die zu einem hohen Kontrast zwischen der teilweise gefüllten Gallenblase und den umliegenden Bereichen führt.

Eine Kontrastverstärkung wie in der bisherigen Offenbarung beschrieben führt dazu, dass in einer künstlichen kontrastverstärkten radiologischen Aufnahme $R4^I$ des Untersuchungsbereichs der Kontrast zwischen der teilgefüllten Gallenblase und den anderen Bereichen noch verstärkt wird. Es ist aber denkbar, dass ein Nutzer eher an einer Kontrastverstärkung der Leber interessiert ist.

In einer bevorzugten Ausführungsform sind das Computersystem und das Computerprogramm der vorliegenden Offenbarung konfiguriert, von dem Nutzer eine Eingabe zu empfangen. In der Eingabe kann der Nutzer einen oder mehrere Bereiche spezifizieren, für die er keine Kontrastverstärkung wünscht. Der Nutzer kann einen solchen Bereich beispielsweise mittels einer Maus oder einem anderen Eingabemittel in der ersten, zweiten und/oder vierten Repräsentation im Ortsraum einzeichnen. So kann der Nutzer in dem in Fig. 6 gezeigten Beispiel die Gallenblase in der ersten Repräsentation $R1^I$ der zweiten Repräsentation $R2^I$ und/oder der vierten Repräsentation $R4^I$ auswählen und/oder markieren. Das Computersystem und das Computerprogramm können konfiguriert sein, die Tonwerte oder Grauwerte aller Bildelemente (Pixel, Voxel) die die (markierte) Gallenblase repräsentieren, auf Null zu setzen. Das Ergebnis ist die Repräsentation $R2^{I*}$, in der die Gallenblase durch schwarze Bildelemente repräsentiert wird. Führt man die Kontrastverstärkung wie in dieser Offenbarung beschrieben auf Basis der Repräsentationen $R1^I$ und $R2^{I*}$ (bzw. auf Basis ihrer korrespondierenden Frequenzraum-Repräsentationen) durch, ergibt sich die künstliche kontrastverstärkte radiologische Aufnahme $R4^{I*}$, in der nun insbesondere der Kontrast zwischen der Leber L und den übrigen Bereichen verstärkt ist, aber die teilweise gefüllte Gallenblase nicht mehr kontrastverstärkt dargestellt ist.

In einer bevorzugten Ausführungsform werden Bereiche, die nicht kontrastverstärkt werden (sollen), automatisch ermittelt. Vorzugsweise wird für alle paarweise korrespondierenden (d.h. die gleichen Koordinaten aufweisenden) Bildelemente der ersten Ortsraum-Repräsentation $R1^I$ und der zweiten Ortsraum-Repräsentation $R2^I$ der Quotient der Tonwerte ermittelt:

$$Q = g2(x, y, z) / g1(x, y, z)$$

Dabei ist Q ein Quotient von Tonwerten, g2(x, y, z) ist der Tonwert des Bildelements mit den Koordinaten x, y, z in der zweiten Repräsentation $R2^I$ und gl(x, y, z) ist der Tonwert des Bildelements mit denselben Koordinaten x, y, z in der ersten Repräsentation $R1^I$. Der Quotient Q der Tonwerte ist ein Maß dafür, wieviel heller das Bildelement mit den Koordinaten x, y, z in der zweiten Repräsentation gegenüber dem korrespondierenden Bildelement in der ersten Repräsentation dargestellt wird. Er gibt die Kontrastverstärkung an, die durch die zweite Menge der Zusammensetzung in dem Untersuchungsbereich, der durch Bildelemente mit den Koordinaten x, y, z repräsentiert wird, verursacht wird.

Das Computersystem und das Computerprogramm können konfiguriert sein, den Quotienten der Tonwerte für alle Bildelemente mit einem vordefinierten Schwellenwert zu vergleichen. Der vordefinierte Schwellenwert gibt eine maximale durch die in der Zusammensetzung enthaltenen Kontrastmittel zu erwartende Kontrastverstärkung an.

Ist ein Quotient der Tonwerte korrespondierender Bildelemente größer als der vordefinierte Schwellenwert, so können die Tonwerte der korrespondierenden Bildelemente auf Null gesetzt werden.

Fig. 7 zeigt beispielhaft und schematisch ein Computersystem gemäß der vorliegenden Offenbarung.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Das in Fig. 7 gezeigte Computersystem (1) umfasst eine Eingabeeinheit (10), eine Steuer- und Recheneinheit (20) und eine Ausgabeeinheit (30).

Die Steuer- und Recheneinheit (20) dient der Steuerung des Computersystems (1), der Koordinierung der Datenflüsse zwischen den Einheiten des Computersystems (1) und der Durchführung von Berechnungen.

Die Steuer- und Recheneinheit (20) ist konfiguriert:

- die Empfangseinheit (10) zu veranlassen, eine erste Repräsentation zu empfangen, wobei die erste Repräsentation einen Untersuchungsbereich eines Untersuchungsobjekts ohne Kontrastmittel oder nach der Applikation einer ersten Menge einer Zusammensetzung umfassend (i) ein extrazelluläres Kontrastmittel und (ii) ein intrazelluläres Kontrastmittel repräsentiert,
- die Empfangseinheit (10) zu veranlassen, eine zweite Repräsentation zu empfangen, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,
- eine dritte Repräsentation auf Basis der ersten Repräsentation und der zweiten Repräsentation zu erzeugen, wobei das Erzeugen der dritten Repräsentation ein Subtrahieren der ersten Repräsentation von der zweiten Repräsentation umfasst,
- eine vierte Repräsentation auf Basis der ersten Repräsentation und der dritten Repräsentation zu erzeugen, wobei das Erzeugen der vierten Repräsentation ein $\alpha$-faches Addieren der dritten Repräsentation zu der ersten Repräsentation umfasst, wobei $\alpha$ eine positive oder negative reelle Zahl ist,
- die Ausgabeeinheit (30) zu veranlassen, die Repräsentation des Untersuchungsbereichs auszugeben und/oder zu speichern und/oder an ein separates Computersystem zu übermitteln.

Fig. 8 zeigt beispielhaft und schematisch eine weitere Ausführungsform des Computersystems der vorliegenden Offenbarung.

Das Computersystem (1) umfasst eine Verarbeitungseinheit (21), die mit einem Speicher (22) verbunden ist. Die Verarbeitungseinheit (21) und der Speicher (22) bilden eine Steuer- und Recheneinheit, wie sie in Fig. 7 gezeigt ist.

Die Verarbeitungseinheit (21) (engl.: *processing unit*) kann einen oder mehrere Prozessoren allein oder in Kombination mit einem oder mehreren Speichern umfassen. Bei der Verarbeitungseinheit (21) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (21) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (21) kann konfiguriert sein, Computerprogramme auszuführen, die in einem Arbeitsspeicher der Verarbeitungseinheit (21) oder im Speicher (22) desselben oder eines anderen Computersystems gespeichert sein können.

Der Speicher (22) kann eine gewöhnliche Computerhardware sein, die in der Lage ist, Informationen wie z.B.

digitale Bildaufnahmen (z.B. Repräsentationen des Untersuchungsbereichs), Daten, Computerprogramme und/oder andere digitale Informationen entweder vorübergehend und/oder dauerhaft zu speichern. Der Speicher (22) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher, eine austauschbare Computerdiskette, eine optische Disc, ein Magnetband oder eine Kombination der oben genannten. Zu den optischen Discs können Compact Discs mit Nur-Lese-Speicher (CD-ROM), Compact Discs mit Lese-/Schreibfunktion (CD-R/W), DVDs, Blu-ray-Discs und ähnliche gehören.

Zusätzlich zum Speicher (22) kann die Verarbeitungseinheit (21) auch mit einer oder mehreren Schnittstellen (11, 12, 31, 32, 33) verbunden sein, um Informationen anzuzeigen, zu übertragen und/oder zu empfangen. Die Schnittstellen können eine oder mehrere Kommunikationsschnittstellen (32, 33) und/oder eine oder mehrere Benutzerschnittstellen (11, 12, 31) umfassen. Die eine oder mehrere Kommunikationsschnittstellen können so konfiguriert sein, dass sie Informationen senden und/oder empfangen, z.B. zu und/oder von einer MRT-Scanner, einem CT-Scanner, einer Ultraschallkamera, anderen Computersystemen, Netzwerken, Datenspeichern oder dergleichen. Die eine oder mehrere Kommunikationsschnittstellen können so konfiguriert sein, dass sie Informationen über physische (verdrahtete) und/oder drahtlose Kommunikationsverbindungen übertragen und/oder empfangen. Die eine oder die mehreren Kommunikationsschnittstellen können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen können eine Anzeige (31) umfassen. Eine Anzeige (31) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (11, 12) kann/können verdrahtet oder drahtlos sein und kann/können so konfiguriert sein, dass sie Informationen von einem Benutzer in das Computersystem (1) empfängt/empfangen, z.B. zur Verarbeitung, Speicherung und/oder Anzeige. Geeignete Beispiele für Benutzereingabeschnittstellen sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und dergleichen umfassen.

Ein oder mehrere Computerprogramme (40) können im Speicher (22) gespeichert sein und von der Verarbeitungseinheit (21) ausgeführt werden, die dadurch programmiert wird, die in dieser Beschreibung beschriebenen Funktionen zu erfüllen. Das Abrufen, Laden und Ausführen von Anweisungen des Computerprogramms (40) kann sequenziell erfolgen, so dass jeweils ein Befehl abgerufen, geladen und ausgeführt wird. Das Abrufen, Laden und/oder Ausführen kann aber auch parallel erfolgen.

Das Computersystem der vorliegenden Offenbarung kann als Laptop, Notebook, Netbook und/der Tablet-PC ausgeführt sein, es kann auch ein Bestandteil eines MRT-Scanners, eines CT-Scanners oder eines Ultraschalldiagnosegeräts sein.

Fig. 9 zeigt beispielhaft und schematisch eine Ausführungsform des computer-implementierten Verfahrens der vorliegenden Offenbarung in Form eines Ablaufschemas.

Das Verfahren (100) umfasst die Schritte:

(110) Empfangen oder Erzeugen einer ersten Repräsentation, wobei die erste Repräsentation einen Untersuchungsbereich eines Untersuchungsobjekts ohne Kontrastmittel oder nach der Applikation einer ersten Menge einer Zusammensetzung umfassend (i) ein extrazelluläres Kontrastmittel und (ii) ein intrazelluläres Kontrastmittel repräsentiert,

(120) Empfangen oder Erzeugen einer zweiten Repräsentation, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,

(130) Erzeugen einer dritten Repräsentation auf Basis der ersten Repräsentation und der zweiten Repräsentation, wobei das Erzeugen der dritten Repräsentation ein Subtrahierender ersten Repräsentation von der zweiten Repräsentation umfasst,

(150) Erzeugen einer vierten Repräsentation, wobei das Erzeugen der vierten Repräsentation ein $\alpha$-faches Addieren der dritten Repräsentation zu der ersten Repräsentation umfasst, wobei $\alpha$ eine positive oder negative reelle Zahl ist,

(170) Ausgeben und/oder Speichern der Repräsentation des Untersuchungsbereichs und/oder Übermitteln der Repräsentation des Untersuchungsbereichs an ein separates Computersystem.

## Patentansprüche

1. Computer-implementiertes Verfahren umfassend:

   - Empfangen oder Erzeugen einer ersten Repräsentation, wobei die erste Repräsentation einen Untersuchungsbereich eines Untersuchungsobjekts ohne Kontrastmittel oder nach der Applikation einer ersten Menge einer Zusammensetzung umfassend (i) ein extrazelluläres Kontrastmittel und (ii) ein intrazelluläres Kontrastmittel repräsentiert,
   - Empfangen oder Erzeugen einer zweiten Repräsentation, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,
   - Erzeugen einer dritten Repräsentation auf Basis der ersten Repräsentation und der zweiten Repräsentation, wobei das Erzeugen der dritten Repräsentation ein Subtrahieren der ersten Repräsentation von der zweiten Repräsentation umfasst,
   - Erzeugen einer vierten Repräsentation, wobei das Erzeugen der vierten Repräsentation ein $\alpha$-faches Addieren der dritten Repräsentation zu der ersten Repräsentation umfasst, wobei $\alpha$ eine positive oder negative reelle Zahl ist,
   - Ausgeben und/oder Speichern der vierten Repräsentation des Untersuchungsbereichs und/oder Übermitteln der vierten Repräsentation des Untersuchungsbereichs an ein separates Computersystem.

2. Verfahren nach Anspruch 1, wobei die erste Repräsentation und die zweite Repräsentation den Untersuchungsbereich im Ortsraum repräsentieren.

3. Verfahren nach Anspruch 1, wobei die erste Repräsentation und die zweite Repräsentation den Untersuchungsbereich im Frequenzraum repräsentieren.

4. Verfahren nach Anspruch 3, wobei das Erzeugen der vierten Repräsentation umfasst:

   - Transformieren des Ergebnisses des $\alpha$-fachen Addierens der dritten Repräsentation zu der ersten Repräsentation in den Ortsraum.

5. Verfahren nach Anspruch 3 oder 4, wobei das Erzeugen der dritten Repräsentation umfasst:

   - Anwenden einer frequenzabhängigen Gewichtsfunktion auf das Ergebnis des Subtrahierens der ersten Repräsentation von der zweiten Repräsentation.

6. Verfahren nach Anspruch 3 oder 4, wobei das Erzeugen der dritten Repräsentation umfasst:

   - Erzeugung einer gewichteten dritten Repräsentation durch Anwenden einer frequenzabhängigen Gewichtsfunktion auf das Ergebnis des Subtrahierens der ersten Repräsentation von der zweiten Repräsentation.

7. Verfahren nach einem der Ansprüche 1 bis 6, ferner umfassend:

   - Empfangen einer ersten Ortsraum-Repräsentation, wobei die erste Ortsraum-Repräsentation den Untersuchungsbereich des Untersuchungsobjekts ohne Kontrastmittel oder nach der Applikation der ersten Menge der Zusammensetzung im Ortsraum repräsentiert,
   - Transformieren der ersten Ortsraum-Repräsentation in die erste Repräsentation des Untersuchungsbereichs des Untersuchungsobjekts im Frequenzraum,
   - Empfangen einer zweiten Ortsraum-Repräsentation, wobei die zweite Ortsraum-Repräsentation den Untersuchungsbereich des Untersuchungsobjekts nach der Applikation der zweiten Menge der Zusammensetzung im Ortsraum repräsentiert,
   - Transformieren der zweiten Ortsraum-Repräsentation in die zweite Repräsentation des Untersuchungsbereichs des Untersuchungsobjekts im Frequenzraum.

8. Verfahren nach einem der Ansprüche 1 bis 7, wobei $\alpha$ größer als 1 ist.

**9.** Verfahren nach einem der Ansprüche 5 bis 8, wobei durch das Anwenden der frequenzabhängigen Gewichtsfunktion auf die dritte Repräsentation Amplitudenwerte mit einer niedrigen Frequenz mit einem größeren Gewichtsfaktor multipliziert werden als Amplitudenwerte mit einer hohen Frequenz.

**10.** Verfahren nach einem der Ansprüche 5 bis 8, wobei beim Anwenden der frequenzabhängigen Gewichtsfunktion auf die dritte Repräsentation Amplitudenwerte mit einer Fensterfunktion multipliziert werden, wobei die Fensterfunktion eine Gauß-Verteilungsfunktion oder eine Hann-Funktion oder eine Poisson-Funktion ist.

**11.** Verfahren nach einem der Ansprüche 1 bis 10, ferner umfassend:

- Empfangen eines oder mehrerer Werte für $\alpha$ von einem Nutzer.

**12.** Verfahren nach einem der Ansprüche 1 bis 10, ferner umfassend:

- Empfangen eines ersten Tonwerts eines ersten Bildelements einer Ortsraumdarstellung der ersten Repräsentation oder der zweiten Repräsentation,
- Empfangen eines zweiten Tonwerts eines zweiten Bildelements einer Ortsraumdarstellung der ersten Repräsentation oder der zweiten Repräsentation,
- Ermitteln eines Wertes für a, für den die Differenz zwischen dem ersten Tonwert und dem zweiten Tonwert einen vordefinierten Wert annimmt oder oberhalb oder unterhalb eines vordefinierten Schwellenwerts liegt.

**13.** Verfahren nach einem der Ansprüche 3 bis 10, ferner umfassend:

- Empfangen einer Markierung eines Bereichs innerhalb einer Ortsraumdarstellung der zweiten Repräsentation,
- Setzen der Tonwerte des Bereichs in der Ortsraumdarstellung der zweiten Repräsentation auf Null, und dabei Erzeugen einer modifizierten zweiten Ortsraumdarstellung,
- Erzeugen der zweiten Repräsentation im Frequenzraum aus der modifizierten zweiten Ortsraumdarstellung.

**14.** Verfahren nach einem der Ansprüche 3 bis 10, ferner umfassend:

- für alle Bildelemente einer ersten Ortraumdarstellung der ersten Repräsentation: Ermitteln eines ersten Tonwerts,
- für alle Bildelemente einer zweiten Ortraumdarstellung der zweiten Repräsentation: Ermitteln eines zweiten Tonwerts,
- für alle korrespondierenden Bildelemente der ersten und zweiten Ortraumdarstellung: Ermitteln eines Quotienten aus zweitem Tonwert und erstem Tonwert,
- Setzten derjenigen Tonwerte der zweiten Ortsraumdarstellung auf Null, für die der Quotient größer als ein vordefinierter Schwellenwert ist, und dabei Erzeugen einer modifizierten zweiten Ortsraumdarstellung,
- Erzeugen der zweiten Repräsentation im Frequenzraum aus der modifizierten zweiten Ortsraumdarstellung.

**15.** Verfahren nach einem der Ansprüche 1 bis 14, wobei die erste Repräsentation und die zweite Repräsentation das Ergebnis einer magnetresonanztomographischen Untersuchung sind und/oder aus Magnetresonanzaufnahmen erzeugt worden sind.

**16.** Verfahren nach einem der Ansprüche 1 bis 15, wobei das Untersuchungsobjekt ein Lebewesen, vorzugsweise ein Säugetier, ganz besonders bevorzugt ein Mensch ist.

**17.** Verfahren nach einem der Ansprüche 1 bis 15, wobei der Untersuchungsbereich eine Leber, eine Niere, ein Herz, eine Lunge, ein Gehirn, ein Magen, eine Blase, eine Prostatadrüse, ein Darm und/oder ein Teil davon und/oder einen anderen/weiteren Teil des Körpers eines Menschen umfasst.

**18.** Verfahren nach einem der Ansprüche 1 bis 17, wobei (i) das extrazelluläre Kontrastmittel eine Verbindung der Formel (I), eine Verbindung der Formel (II) oder eine Verbindung der Formel (III) ist, wobei die Verbindung der Formel (I) die Formel

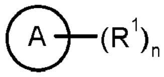 hat,

(I) ,

wobei:

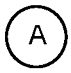 eine 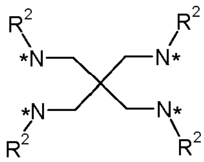

Gruppe-repräsentiert,

wobei * die Anknüpfung zu $R^1$ darstellt,
$R^1$ eine Gruppe $R^3$ darstellt,
n = 4 ist,
$R^2$ ein Wasserstoffatom darstellt,
$R^3$ eine Gruppe darstellt, die aus

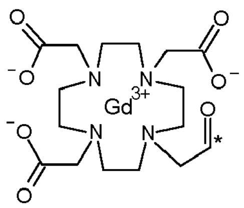

und

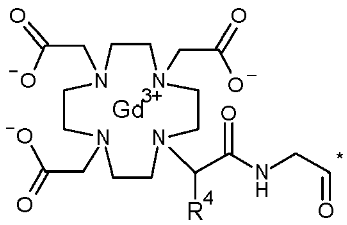

ausgewählt wird,
wobei * die Anknüpfung zu dem Rest des Moleküls darstellt,
$R^4$ ein Wasserstoffatom oder eine Methylgruppe darstellt,
oder ein Stereoisomer, Tautomer, Hydrat, Solvat oder Salz davon, oder eine Mischung davon;
wobei die Verbindung der Formel (II) die Formel

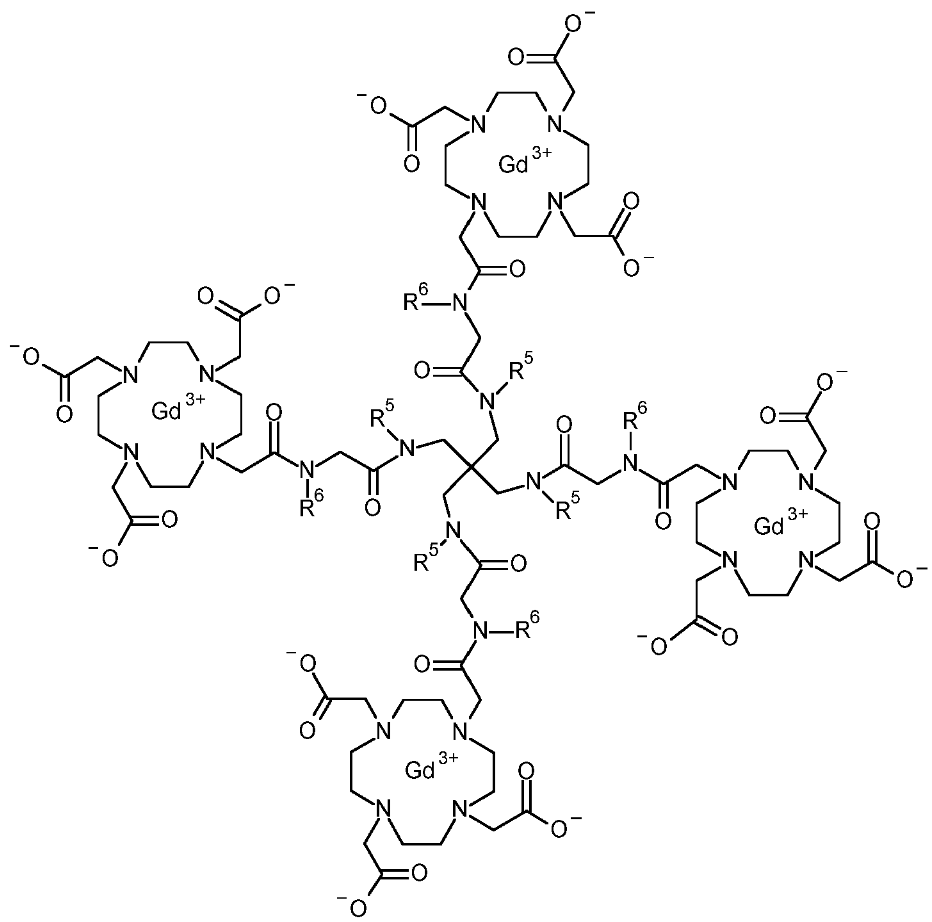

(**II**) hat,

wobei

$R^5$ ein Wasserstoffatom darstellt,
$R^6$ eine Gruppe ausgewählt aus
$C_1$-$C_4$-Alkyl, $C_3$-$C_5$-Cycloalkyl, ($C_1$-$C_2$-Alkoxy)-($C_2$-$C_3$-Alkyl)- und Phenyl darstellt,

wobei die $C_1$-$C_4$-Alkylgruppe gegebenenfalls gleich oder verschieden mit einer Phenylgruppe substituiert ist, wobei die Phenylgruppe gegebenenfalls ein-, zwei- oder dreimal, gleich oder verschieden mit einem Halogenatom oder einer Gruppe, ausgewählt aus $C_1$-$C_3$-Alkyl, $C_1$-$C_3$-Haloalkyl and $C_1$-$C_3$-Alkoxy,
und
wobei die Phenylgruppe gegebenenfalls ein-, zwei- oder dreimal, gleich oder verschieden, mit einem Halogenatom oder einer Gruppe ausgewählt aus $C_1$-$C_3$-Alkyl, $C_1$-$C_3$-Haloalkyl und $C_1$-$C_3$-Alkoxy substituiert ist

oder ein Stereoisomer, Tautomer, Hydrat, Solvat oder Salz davon, oder eine Mischung davon;
und die Verbindung der Formel (III) die Formel,

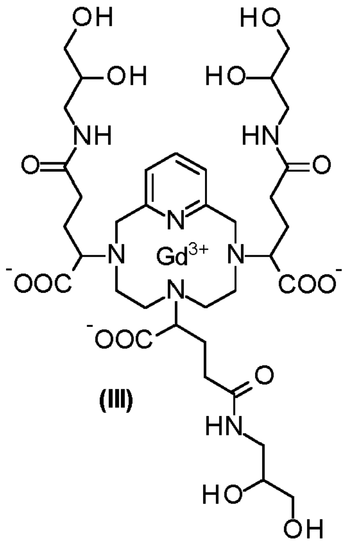

(III)

hat.

und (ii) das intrazelluläre Kontrastmittel eine Verbindung der Formel (IV) oder eine Verbindung der Formel (V) ist, wobei die Verbindung der Formel (IV) die Formel

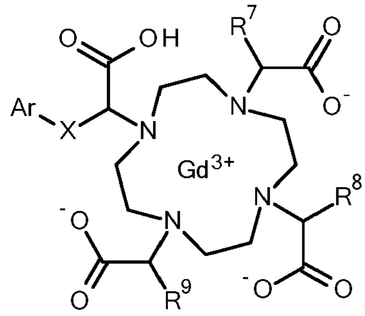

**(IV)**

hat, wobei

Ar eine Gruppe ausgewählt aus

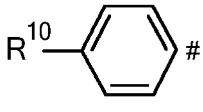

und

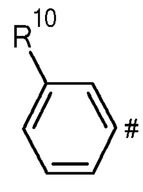

darstellt,

wobei # die Anknüpfung zu X darstellt,

X eine Gruppe darstellt, die aus $CH_2$ and $(CH_2)_3$ ausgewählt wird,

$R^7$ und $R^9$ unabhängig voneinander ein Wasserstoffatom oder eine $-CH_2OH$-Gruppe darstellen,

$R^8$ ein Wasserstoffatom ist oder eine Gruppe darstellt, die aus $C_1$-$C_3$-Alkyl, $-CH_2OH$, $-(CH_2)_2OH$ und $-CH_2OCH_3$ ausgewählt wird,

$R^{10}$ eine Gruppe darstellt, die aus $C_2$-$C_5$-Alkoxy, ($C_1$-$C_3$-Alkoxy)-$(CH_2)_2$-O-, ($C_1$-$C_3$-Alkoxy)-$(CH_2)_2$-O-$(CH_2)_2$-O- and ($C_1$-$C_3$-Alkoxy)-$(CH_2)_2$-O-$(CH_2)_2$-O-$(CH_2)_2$-O- ausgewählt wird, wobei die $C_1$-$C_3$-Alkoxy und $C_2$-$C_5$-Alkoxy Gruppen optional ein- zwei-, drei- oder viermal mit einem Fluoratom substituiert sind,

oder ein Stereoisomer, Tautomer, Hydrat, Solvat oder Salz davon, oder eine Mischung davon;

und die Verbindung der Formel (V) die Formel

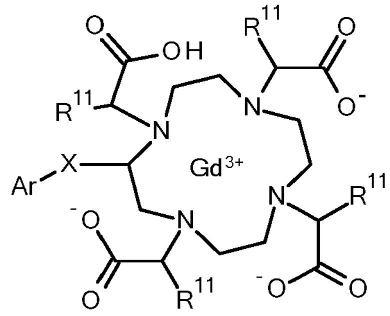

**(V)**

hat, wobei Ar eine Gruppe ausgewählt aus

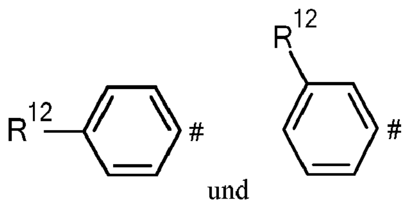

und

darstellt,
wobei # die Anknüpfung zu X darstellt,
X eine Gruppe darstellt, die aus $CH_2$ and $(CH_2)_2$ ausgewählt wird,
$R^{11}$ ein Wasserstoffatom oder eine Gruppe ausgewählt aus $C_1$-$C_3$-Alkyl, $-CH_2OH$, $-(CH_2)_2OH$ and $-CH_2OCH_3$ darstellt,
$R^{12}$ eine Gruppe ausgewählt aus $C_2$-$C_5$-Alkoxy, $(H_3C-CH_2O)-(CH_2)_2-O-$, $(H_3C-CH_2O)-(CH_2)_2-O-(CH_2)_2-O-$ and $(H_3C-CH_2O)-(CH_2)_2-O-(CH_2)_2-O-(CH_2)_2-O-$ darstellt,
oder ein Stereoisomer, Tautomer, Hydrat, Solvat oder Salz davon, oder eine Mischung davon.

**19.** Computersystem umfassend

einen Prozessor; und
einen Speicher, der ein Anwendungsprogramm speichert, das so konfiguriert ist, dass es, wenn es vom Prozessor ausgeführt wird, eine Operation durchführt, wobei die Operation umfasst:

- Empfangen oder Erzeugen einer ersten Repräsentation, wobei die erste Repräsentation einen Untersuchungsbereich eines Untersuchungsobjekts ohne Kontrastmittel oder nach der Applikation einer ersten Menge einer Zusammensetzung umfassend (i) ein extrazelluläres Kontrastmittel und (ii) ein intrazelluläres Kontrastmittel repräsentiert,
- Empfangen oder Erzeugen einer zweiten Repräsentation, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,
- Erzeugen einer dritten Repräsentation auf Basis der ersten Repräsentation und der zweiten Repräsentation, wobei das Erzeugen der dritten Repräsentation ein Subtrahieren der ersten Repräsentation von der zweiten Repräsentation umfasst,
- Erzeugen einer vierten Repräsentation, wobei das Erzeugen der vierten Repräsentation ein $\alpha$-faches Addieren der dritten Repräsentation zu der ersten Repräsentation umfasst, wobei $\alpha$ eine positive oder negative reelle Zahl ist,
- Ausgeben und/oder Speichern der vierten Repräsentation des Untersuchungsbereichs und/oder Übermitteln der vierten Repräsentation des Untersuchungsbereichs an ein separates Computersystem.

**20.** Computerprogrammprodukt umfassend einen Datenträger, auf dem ein Computerprogramm gespeichert ist, wobei

das Computerprogramm in einen Arbeitsspeicher eines Computersystems geladen werden kann und dort das Computersystem dazu veranlasst, folgende Schritte ausführen:

- Empfangen oder Erzeugen einer ersten Repräsentation, wobei die erste Repräsentation einen Untersuchungsbereich eines Untersuchungsobjekts ohne Kontrastmittel oder nach der Applikation einer ersten Menge einer Zusammensetzung umfassend (i) ein extrazelluläres Kontrastmittel und (ii) ein intrazelluläres Kontrastmittel repräsentiert,
- Empfangen oder Erzeugen einer zweiten Repräsentation, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,
- Erzeugen einer dritten Repräsentation auf Basis der ersten Repräsentation und der zweiten Repräsentation, wobei das Erzeugen der dritten Repräsentation ein Subtrahieren der ersten Repräsentation von der zweiten Repräsentation umfasst,
- Erzeugen einer vierten Repräsentation, wobei das Erzeugen der vierten Repräsentation ein $\alpha$-faches Addieren der dritten Repräsentation zu der ersten Repräsentation umfasst, wobei $\alpha$ eine positive oder negative reelle Zahl ist,
- Ausgeben und/oder Speichern der vierten Repräsentation des Untersuchungsbereichs und/oder Übermitteln der vierten Repräsentation des Untersuchungsbereichs an ein separates Computersystem.

**21.** Verwendung einer Zusammensetzung umfassend (i) ein extrazelluläres Kontrastmittel und (ii) ein intrazelluläres Kontrastmittel in einem radiologischen Untersuchungsverfahren umfassend:

- Empfangen oder Erzeugen einer ersten Repräsentation, wobei die erste Repräsentation einen Untersuchungsbereich eines Untersuchungsobjekts ohne Kontrastmittel oder nach der Applikation einer ersten Menge der repräsentiert,
- Empfangen oder Erzeugen einer zweiten Repräsentation, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,
- Erzeugen einer dritten Repräsentation auf Basis der ersten Repräsentation und der zweiten Repräsentation, wobei das Erzeugen der dritten Repräsentation ein Subtrahieren der ersten Repräsentation von der zweiten Repräsentation umfasst,
- Erzeugen einer vierten Repräsentation, wobei das Erzeugen der vierten Repräsentation ein $\alpha$-faches Addieren der dritten Repräsentation zu der ersten Repräsentation umfasst, wobei $\alpha$ eine positive oder negative reelle Zahl ist,
- Ausgeben und/oder Speichern der vierten Repräsentation des Untersuchungsbereichs und/oder Übermitteln der vierten Repräsentation des Untersuchungsbereichs an ein separates Computersystem.

**22.** Verwendung gemäß Anspruch 21, wobei das radiologische Untersuchungsverfahren eine magnetresonanztomographische Untersuchung ist und wobei (i) das extrazelluläre Kontrastmittel eine Verbindung der Formel (I), eine Verbindung der Formel (II) oder eine Verbindung der Formel (III) ist, wobei die Verbindung der Formel (I) die Formel

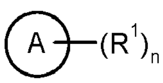

**(I)**,

hat, wobei:

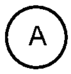 eine 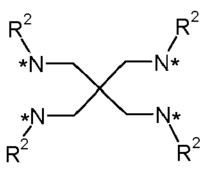

Gruppe-repräsentiert,

wobei * die Anknüpfung zu $R^1$ darstellt,
$R^1$ eine Gruppe $R^3$ darstellt,
n = 4 ist,
$R^2$ ein Wasserstoffatom darstellt,
$R^3$ eine Gruppe darstellt, die aus

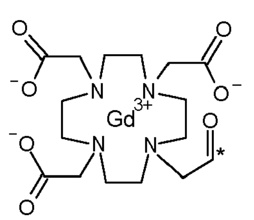

und

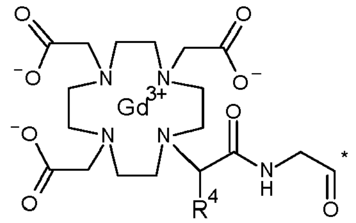

ausgewählt wird,
wobei * die Anknüpfung zu dem Rest des Moleküls darstellt,
$R^4$ ein Wasserstoffatom oder eine Methylgruppe darstellt,
oder ein Stereoisomer, Tautomer, Hydrat, Solvat oder Salz davon, oder eine Mischung davon;
wobei die Verbindung der Formel (II) die Formel

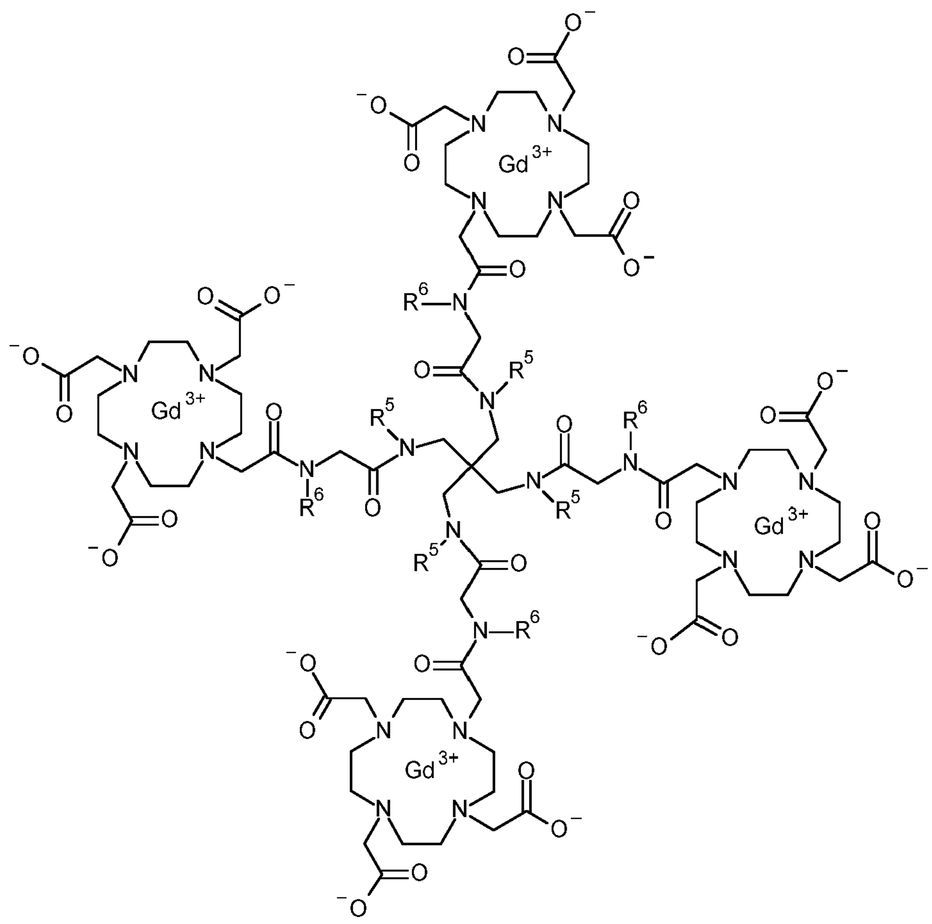

(**II**) hat,

wobei

$R^5$ ein Wasserstoffatom darstellt,
$R^6$ eine Gruppe ausgewählt aus

$C_1$-$C_4$-Alkyl, $C_3$-$C_5$-Cycloalkyl, ($C_1$-$C_2$-Alkoxy)-($C_2$-$C_3$-Alkyl)- und Phenyl darstellt,

wobei die $C_1$-$C_4$-Alkylgruppe gegebenenfalls gleich oder verschieden mit einer Phenylgruppe substituiert ist, wobei die Phenylgruppe gegebenenfalls ein-, zwei- oder dreimal, gleich oder verschieden mit einem Halogenatom oder einer Gruppe, ausgewählt aus $C_1$-$C_3$-Alkyl, $C_1$-$C_3$-Haloalkyl and $C_1$-$C_3$-Alkoxy,
und
wobei die Phenylgruppe gegebenenfalls ein-, zwei- oder dreimal, gleich oder verschieden, mit einem Halogenatom oder einer Gruppe ausgewählt aus $C_1$-$C_3$-Alkyl, $C_1$-$C_3$-Haloalkyl und $C_1$-$C_3$-Alkoxy substituiert ist

oder ein Stereoisomer, Tautomer, Hydrat, Solvat oder Salz davon, oder eine Mischung davon;
und die Verbindung der Formel (III) die Formel,

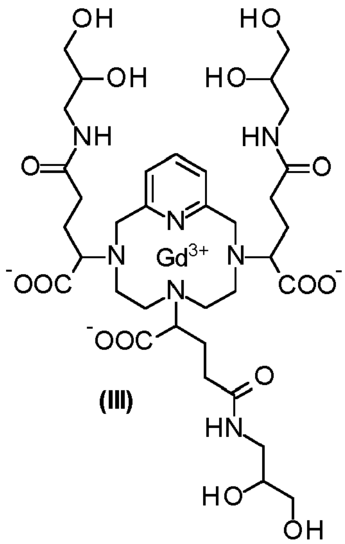

**(III)**

hat.
und (ii) das intrazelluläre Kontrastmittel eine Verbindung der Formel (IV) oder eine Verbindung der Formel (V) ist, wobei die Verbindung der Formel (IV) die Formel

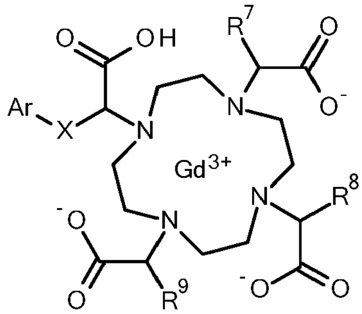

**(IV)**

hat, wobei
Ar eine Gruppe ausgewählt aus

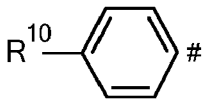

und

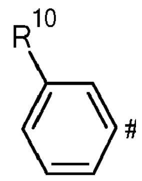

darstellt,
wobei # die Anknüpfung zu X darstellt,
X eine Gruppe darstellt, die aus $CH_2$ and $(CH_2)_3$ ausgewählt wird,
$R^7$ und $R^9$ unabhängig voneinander ein Wasserstoffatom oder eine $-CH_2OH$-Gruppe darstellen,
$R^8$ ein Wasserstoffatom ist oder eine Gruppe darstellt, die aus $C_1$-$C_3$-Alkyl, $-CH_2OH$, $-(CH_2)_2OH$ und $-CH_2OCH_3$ ausgewählt wird,
$R^{10}$ eine Gruppe darstellt, die aus $C_2$-$C_5$-Alkoxy, ($C_1$-$C_3$-Alkoxy)-$(CH_2)_2$-O-, ($C_1$-$C_3$-Alkoxy)-$(CH_2)_2$-O-$(CH_2)_2$-O- and ($C_1$-$C_3$-Alkoxy)-$(CH_2)_2$-O-$(CH_2)_2$-O-$(CH_2)_2$-O- ausgewählt wird, wobei die $C_1$-$C_3$-Alkoxy und $C_2$-$C_5$-Alkoxy Gruppen optional ein- zwei-, drei- oder viermal mit einem Fluoratom substituiert sind,
oder ein Stereoisomer, Tautomer, Hydrat, Solvat oder Salz davon, oder eine Mischung davon;
und die Verbindung der Formel (V) die Formel

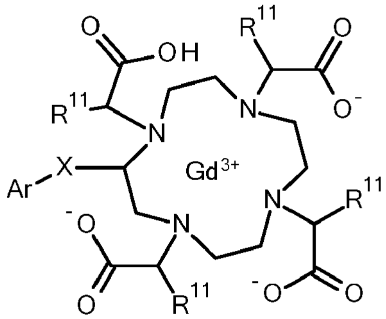

**(V)**

hat, wobei
Ar eine Gruppe ausgewählt aus

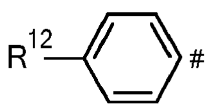

und

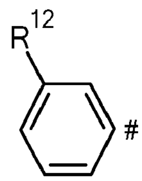

darstellt,
wobei # die Anknüpfung zu X darstellt,
X eine Gruppe darstellt, die aus $CH_2$ and $(CH_2)_2$ ausgewählt wird,
$R^{11}$ ein Wasserstoffatom oder eine Gruppe ausgewählt aus $C_1$-$C_3$-Alkyl, $-CH_2OH$, $-(CH_2)_2OH$ and $-CH_2OCH_3$ darstellt,
$R^{12}$ eine Gruppe ausgewählt aus $C_2$-$C_5$-Alkoxy, ($H_3C$-$CH_2O$)-$(CH_2)_2$-O-, ($H_3C$-$CH_2O$)-$(CH_2)_2$-O-$(CH_2)_2$-O- and ($H_3C$-$CH_2O$)-$(CH_2)_2$-O-$(CH_2)_2$-O-$(CH_2)_2$-O- darstellt,
oder ein Stereoisomer, Tautomer, Hydrat, Solvat oder Salz davon, oder eine Mischung davon.

**23.** Zusammensetzung umfassend (i) ein extrazelluläres Kontrastmittel und (ii) ein intrazelluläres Kontrastmittel zur Verwendung in einem radiologischen Untersuchungsverfahren umfassend:

- Empfangen oder Erzeugen einer ersten Repräsentation, wobei die erste Repräsentation einen Untersuchungsbereich eines Untersuchungsobjekts ohne Kontrastmittel oder nach der Applikation einer ersten Menge der Zusammensetzung repräsentiert,
- Empfangen oder Erzeugen einer zweiten Repräsentation, wobei die zweite Repräsentation den Untersuchungsbereich des Untersuchungsobjekts nach einer Applikation einer zweiten Menge der Zusammensetzung repräsentiert, wobei die zweite Menge größer als die erste Menge ist,
- Erzeugen einer dritten Repräsentation auf Basis der ersten Repräsentation und der zweiten Repräsentation, wobei das Erzeugen der dritten Repräsentation ein Subtrahieren der ersten Repräsentation von der zweiten Repräsentation umfasst,
- Erzeugen einer vierten Repräsentation, wobei das Erzeugen der vierten Repräsentation ein $\alpha$-faches Addieren der dritten Repräsentation zu der ersten Repräsentation umfasst, wobei $\alpha$ eine positive oder negative reelle Zahl ist,
- Ausgeben und/oder Speichern der vierten Repräsentation des Untersuchungsbereichs und/oder Übermitteln der vierten Repräsentation des Untersuchungsbereichs an ein separates Computersystem.

**24.** Kontrastmittel zur Verwendung gemäß Anspruch 23, wobei das radiologische Untersuchungsverfahren eine magnetresonanztomographische Untersuchung ist und wobei (i) das extrazelluläre Kontrastmittel eine Verbindung der Formel (I), eine Verbindung der Formel (II) oder eine Verbindung der Formel (III) ist, wobei die Verbindung der Formel (I) die Formel

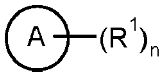 hat,

**(I)**,

wobei:

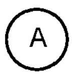 eine 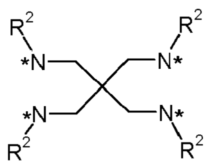

Gruppe-repräsentiert,

wobei * die Anknüpfung zu $R^1$ darstellt,
$R^1$ eine Gruppe $R^3$ darstellt,
n = 4 ist,
$R^2$ ein Wasserstoffatom darstellt,

$R^3$ eine Gruppe darstellt, die aus

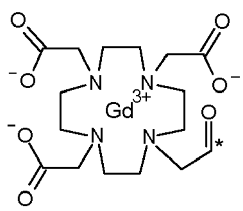 und 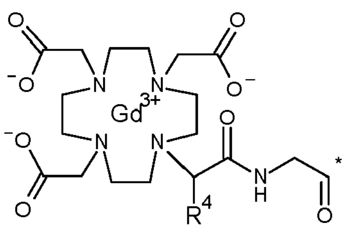

ausgewählt wird,

wobei * die Anknüpfung zu dem Rest des Moleküls darstellt,
$R^4$ ein Wasserstoffatom oder eine Methylgruppe darstellt,
oder ein Stereoisomer, Tautomer, Hydrat, Solvat oder Salz davon, oder eine Mischung davon;

wobei die Verbindung der Formel (II) die Formel

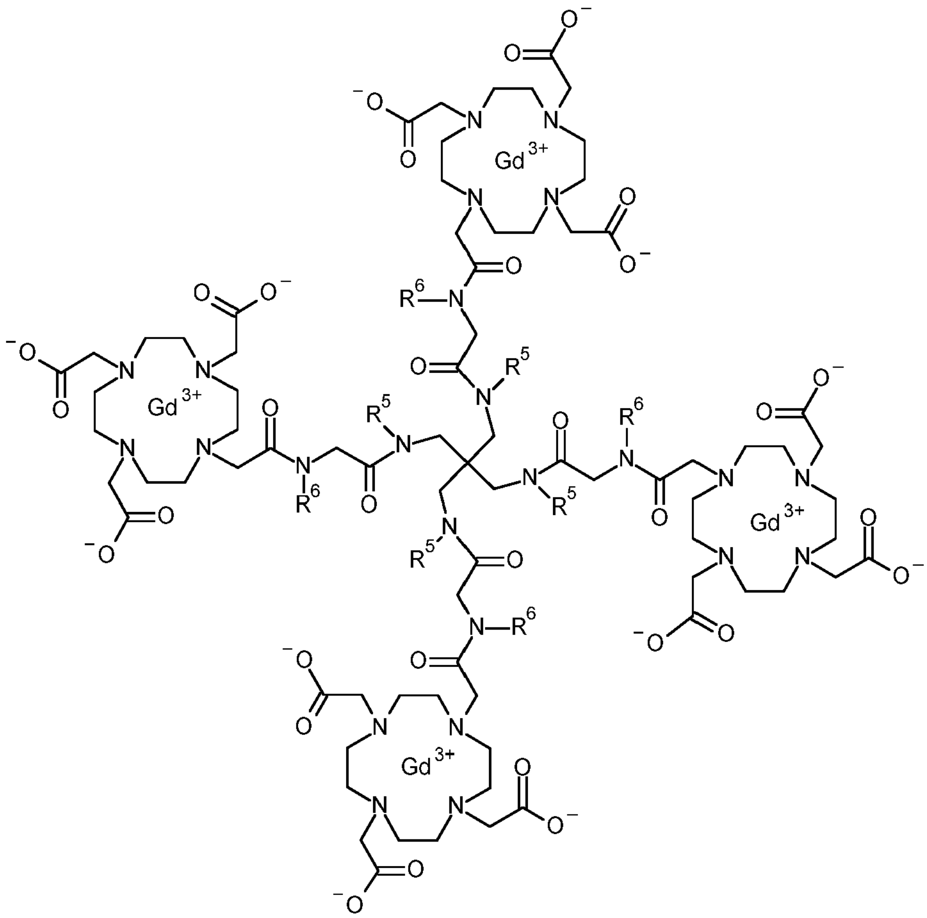

(**II**) hat,

wobei

$R^5$ ein Wasserstoffatom darstellt,
$R^6$ eine Gruppe ausgewählt aus
$C_1$-$C_4$-Alkyl, $C_3$-$C_5$-Cycloalkyl, ($C_1$-$C_2$-Alkoxy)-($C_2$-$C_3$-Alkyl)- und Phenyl darstellt,

wobei die $C_1$-$C_4$-Alkylgruppe gegebenenfalls gleich oder verschieden mit einer Phenylgruppe substituiert ist, wobei die Phenylgruppe gegebenenfalls ein-, zwei- oder dreimal, gleich oder verschieden mit einem Halogenatom oder einer Gruppe, ausgewählt aus $C_1$-$C_3$-Alkyl, $C_1$-$C_3$-Haloalkyl and $C_1$-$C_3$-Alkoxy, und wobei die Phenylgruppe gegebenenfalls ein-, zwei- oder dreimal, gleich oder verschieden, mit einem Halogenatom oder einer Gruppe ausgewählt aus $C_1$-$C_3$-Alkyl, $C_1$-$C_3$-Haloalkyl und $C_1$-$C_3$-Alkoxy substituiert ist

oder ein Stereoisomer, Tautomer, Hydrat, Solvat oder Salz davon, oder eine Mischung davon;
und die Verbindung der Formel (III) die Formel,

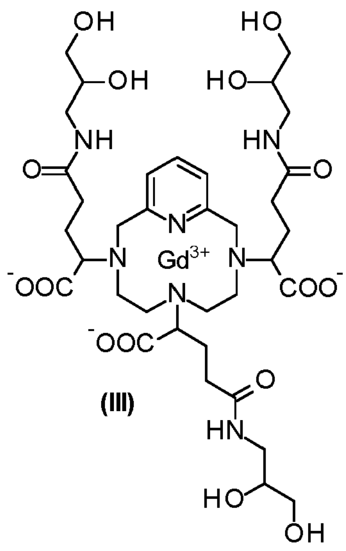

(III)

hat.

und (ii) das intrazelluläre Kontrastmittel eine Verbindung der Formel (IV) oder eine Verbindung der Formel (V) ist, wobei die Verbindung der Formel (IV) die Formel

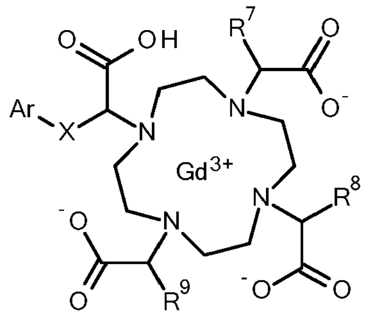

(IV)

hat, wobei

Ar eine Gruppe ausgewählt aus

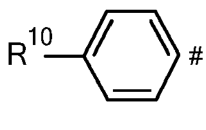

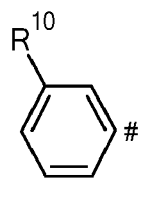

und

darstellt,

wobei # die Anknüpfung zu X darstellt,

X eine Gruppe darstellt, die aus $CH_2$ and $(CH_2)_3$ ausgewählt wird,

$R^7$ und $R^9$ unabhängig voneinander ein Wasserstoffatom oder eine $-CH_2OH$-Gruppe darstellen,

$R^8$ ein Wasserstoffatom ist oder eine Gruppe darstellt, die aus $C_1$-$C_3$-Alkyl, $-CH_2OH$, $-(CH_2)_2OH$ und $-CH_2OCH_3$ ausgewählt wird,

$R^{10}$ eine Gruppe darstellt, die aus $C_2$-$C_5$-Alkoxy, ($C_1$-$C_3$-Alkoxy)-$(CH_2)_2$-O-, ($C_1$-$C_3$-Alkoxy)-$(CH_2)_2$-O-$(CH_2)_2$-O- and ($C_1$-$C_3$-Alkoxy)-$(CH_2)_2$-O-$(CH_2)_2$-O-$(CH_2)_2$-O- ausgewählt wird, wobei die $C_1$-$C_3$-Alkoxy und $C_2$-$C_5$-Alkoxy Gruppen optional ein- zwei-, drei- oder viermal mit einem Fluoratom substituiert sind,

oder ein Stereoisomer, Tautomer, Hydrat, Solvat oder Salz davon, oder eine Mischung davon;

und die Verbindung der Formel (V) die Formel

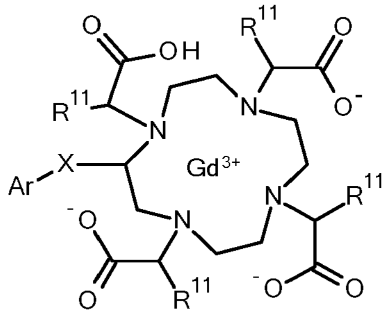

**(V)**

hat, wobei
Ar eine Gruppe ausgewählt aus

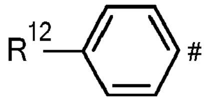

und

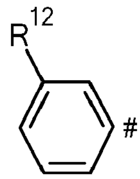

darstellt,
wobei # die Anknüpfung zu X darstellt,
X eine Gruppe darstellt, die aus $CH_2$ and $(CH_2)_2$ ausgewählt wird,
$R^{11}$ ein Wasserstoffatom oder eine Gruppe ausgewählt aus $C_1$-$C_3$-Alkyl, $-CH_2OH$, $-(CH_2)_2OH$ and $-CH_2OCH_3$ darstellt,
$R^{12}$ eine Gruppe ausgewählt aus $C_2$-$C_5$-Alkoxy, $(H_3C-CH_2O)-(CH_2)_2-O-$, $(H_3C-CH_2O)-(CH_2)_2-O-(CH_2)_2-O-$ and $(H_3C-CH_2O)-(CH_2)_2-O-(CH_2)_2-O-(CH_2)_2-O-$ darstellt,
oder ein Stereoisomer, Tautomer, Hydrat, Solvat oder Salz davon, oder eine Mischung davon.

**25.** Kit umfassend ein Computerprogrammprodukt gemäß Anspruch 20 und eine Zusammensetzung umfassend ein extrazelluläres Kontrastmittel und ein intrazelluläres Kontrsatmittel.

**26.** Kit gemäß Anspruch 25, wobei (i) das extrazelluläre Kontrastmittel eine Verbindung der Formel (I), eine Verbindung der Formel (II) oder eine Verbindung der Formel (III) ist, wobei die Verbindung der Formel (I) die Formel

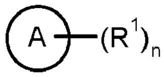

hat,

**(I)**,

wobei:

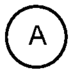

eine

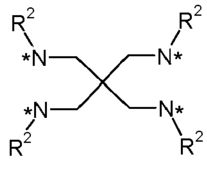

Gruppe-repräsentiert,

wobei * die Anknüpfung zu $R^1$ darstellt,

$R^1$ eine Gruppe $R^3$ darstellt,
n = 4 ist,
$R^2$ ein Wasserstoffatom darstellt,
$R^3$ eine Gruppe darstellt, die aus

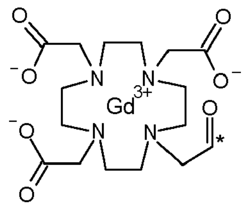

und

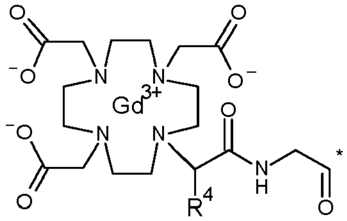

ausgewählt wird,
wobei * die Anknüpfung zu dem Rest des Moleküls darstellt,
$R^4$ ein Wasserstoffatom oder eine Methylgruppe darstellt,
oder ein Stereoisomer, Tautomer, Hydrat, Solvat oder Salz davon, oder eine Mischung davon;
wobei die Verbindung der Formel (II) die Formel

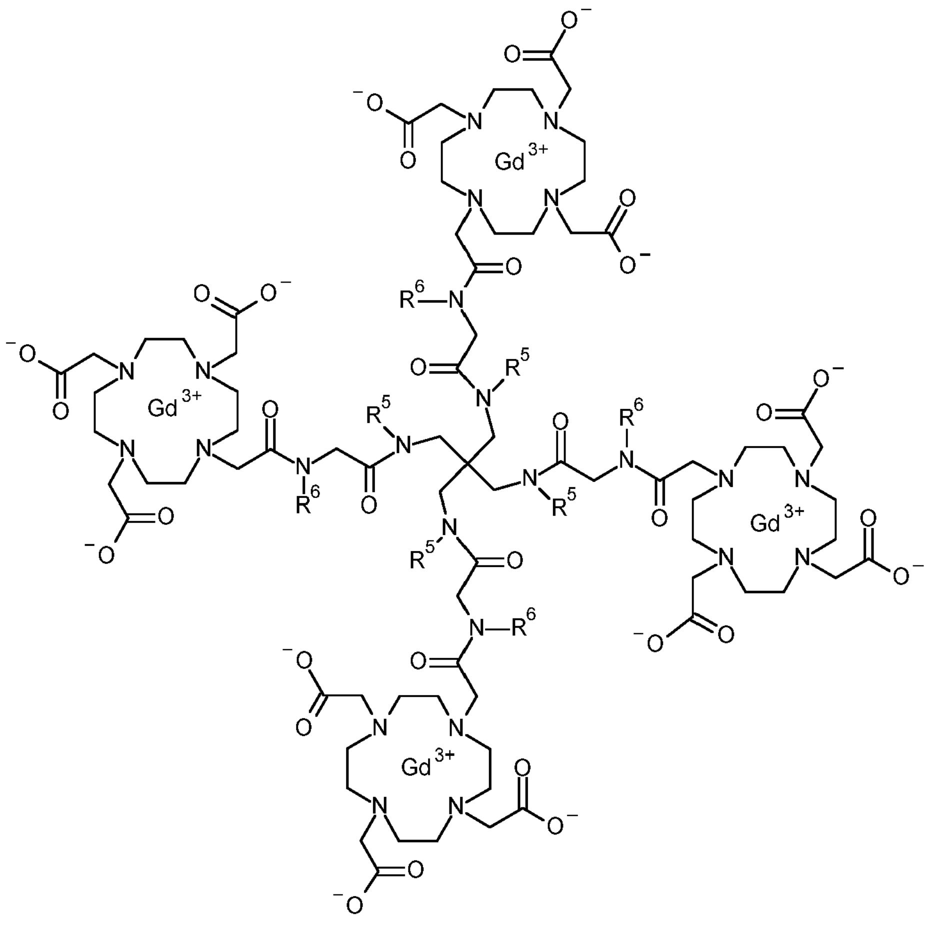

**(II)** hat,

wobei

$R^5$ ein Wasserstoffatom darstellt,
$R^6$ eine Gruppe ausgewählt aus
$C_1$-$C_4$-Alkyl, $C_3$-$C_5$-Cycloalkyl, ($C_1$-$C_2$-Alkoxy)-($C_2$-$C_3$-Alkyl)- und Phenyl darstellt,

wobei die $C_1$-$C_4$-Alkylgruppe gegebenenfalls gleich oder verschieden mit einer Phenylgruppe substituiert ist, wobei die Phenylgruppe gegebenenfalls ein-, zwei- oder dreimal, gleich oder verschieden mit einem Halogenatom oder einer Gruppe, ausgewählt aus $C_1$-$C_3$-Alkyl, $C_1$-$C_3$-Haloalkyl and $C_1$-$C_3$-Alkoxy,

und

wobei die Phenylgruppe gegebenenfalls ein-, zwei- oder dreimal, gleich oder verschieden, mit einem Halogenatom oder einer Gruppe ausgewählt aus $C_1$-$C_3$-Alkyl, $C_1$-$C_3$-Haloalkyl und $C_1$-$C_3$-Alkoxy substituiert ist

oder ein Stereoisomer, Tautomer, Hydrat, Solvat oder Salz davon, oder eine Mischung davon;
und die Verbindung der Formel (III) die Formel,

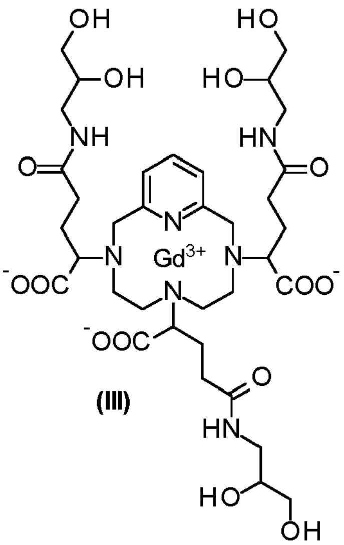

**(III)**

hat.
und (ii) das intrazelluläre Kontrastmittel eine Verbindung der Formel (IV) oder eine Verbindung der Formel (V) ist, wobei die Verbindung der Formel (IV) die Formel

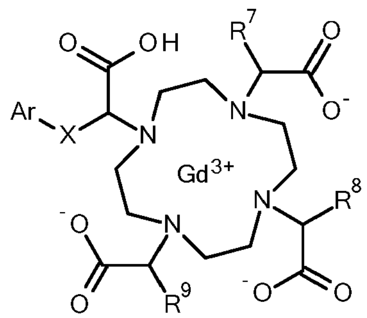

**(IV)**

hat, wobei
Ar eine Gruppe ausgewählt aus

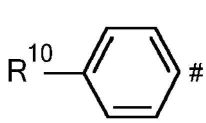

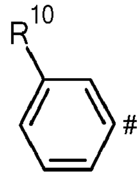

und

darstellt,
wobei # die Anknüpfung zu X darstellt,
X eine Gruppe darstellt, die aus $CH_2$ and $(CH_2)_3$ ausgewählt wird,
$R^7$ und $R^9$ unabhängig voneinander ein Wasserstoffatom oder eine $-CH_2OH$-Gruppe darstellen,
$R^8$ ein Wasserstoffatom ist oder eine Gruppe darstellt, die aus $C_1$-$C_3$-Alkyl, $-CH_2OH$, $-(CH_2)_2OH$ und $-CH_2OCH_3$ ausgewählt wird,
$R^{10}$ eine Gruppe darstellt, die aus $C_2$-$C_5$-Alkoxy, ($C_1$-$C_3$-Alkoxy)-$(CH_2)_2$-O-, ($C_1$-$C_3$-Alkoxy)-$(CH_2)_2$-O-$(CH_2)_2$-O- and ($C_1$-$C_3$-Alkoxy)-$(CH_2)_2$-O-$(CH_2)_2$-O-$(CH_2)_2$-O- ausgewählt wird, wobei die $C_1$-$C_3$-Alkoxy und $C_2$-$C_5$-Alkoxy Gruppen optional ein- zwei-, drei- oder viermal mit einem Fluoratom substituiert sind,
oder ein Stereoisomer, Tautomer, Hydrat, Solvat oder Salz davon, oder eine Mischung davon;
und die Verbindung der Formel (V) die Formel

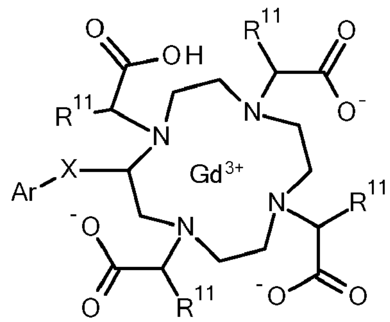

**(V)**

hat, wobei
Ar eine Gruppe ausgewählt aus

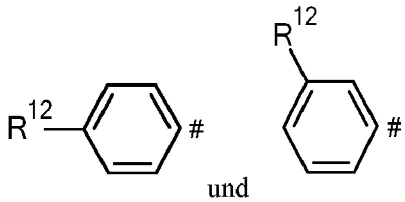

darstellt,
wobei # die Anknüpfung zu X darstellt,
X eine Gruppe darstellt, die aus $CH_2$ and $(CH_2)_2$ ausgewählt wird,
$R^{11}$ ein Wasserstoffatom oder eine Gruppe ausgewählt aus $C_1$-$C_3$-Alkyl, $-CH_2OH$, $-(CH_2)_2OH$ and $-CH_2OCH_3$ darstellt,
$R^{12}$ eine Gruppe ausgewählt aus $C_2$-$C_5$-Alkoxy, $(H_3C-CH_2O)-(CH_2)_2-O-$, $(H_3C-CH_2O)-(CH_2)_2-O-(CH_2)_2-O-$ and $(H_3C-CH_2O)-(CH_2)_2-O-(CH_2)_2-O-(CH_2)_2-O-$ darstellt,
oder ein Stereoisomer, Tautomer, Hydrat, Solvat oder Salz davon, oder eine Mischung davon.

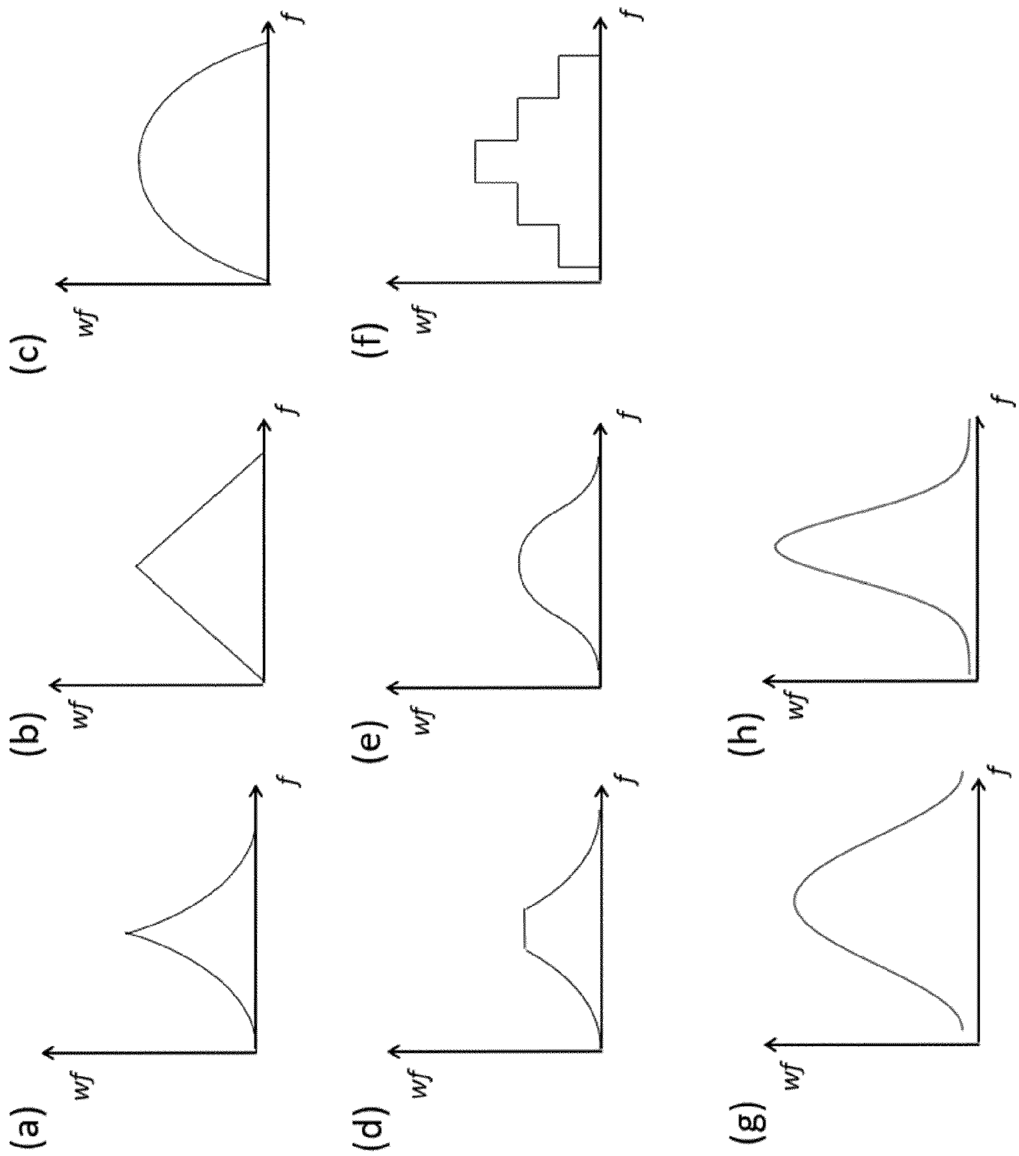


Fig. 1

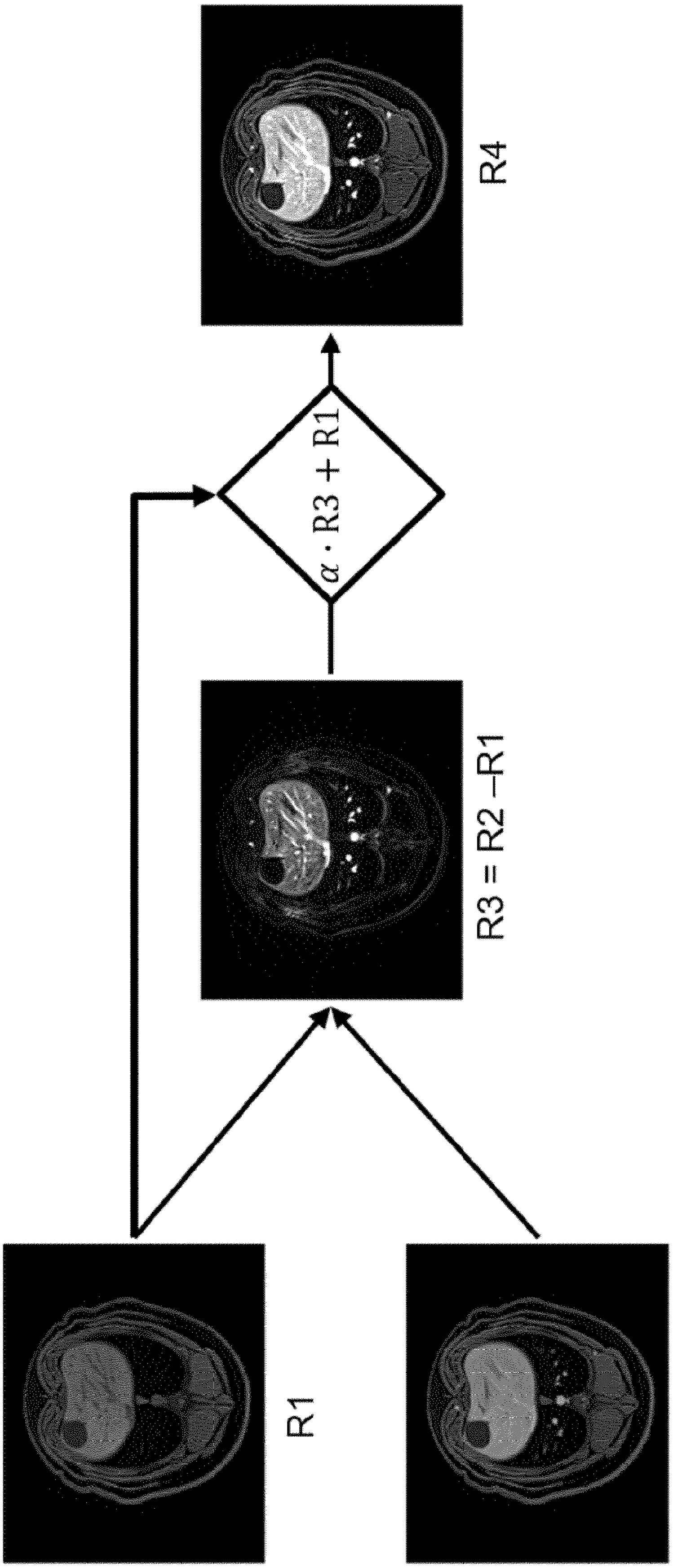


Fig. 2

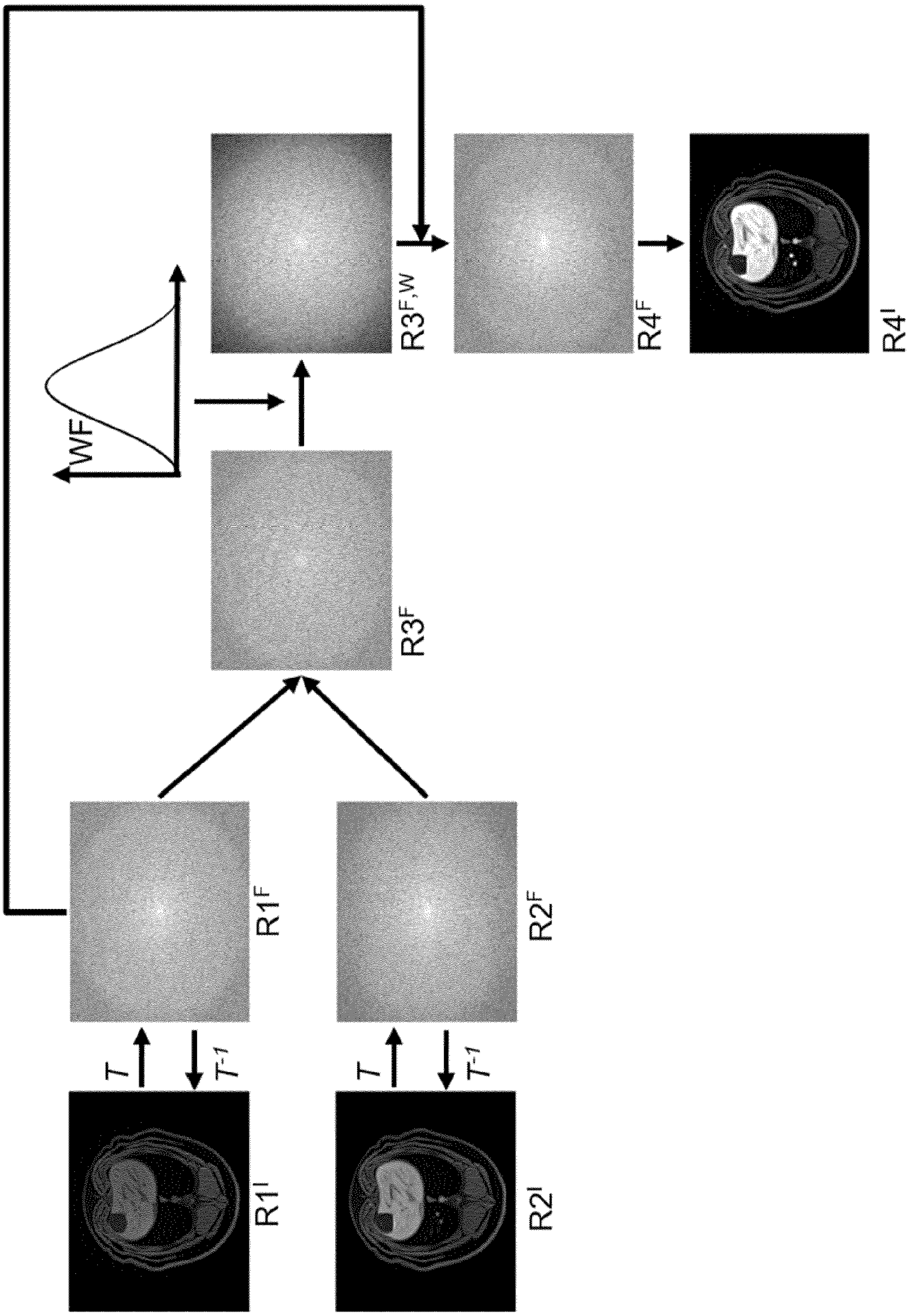


Fig. 3

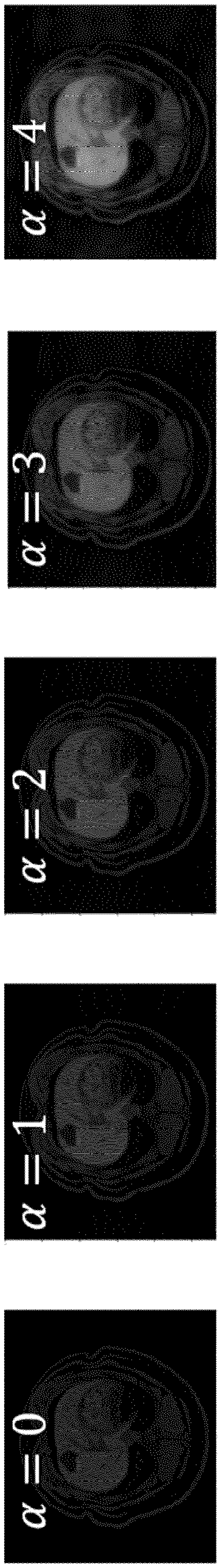


Fig. 4

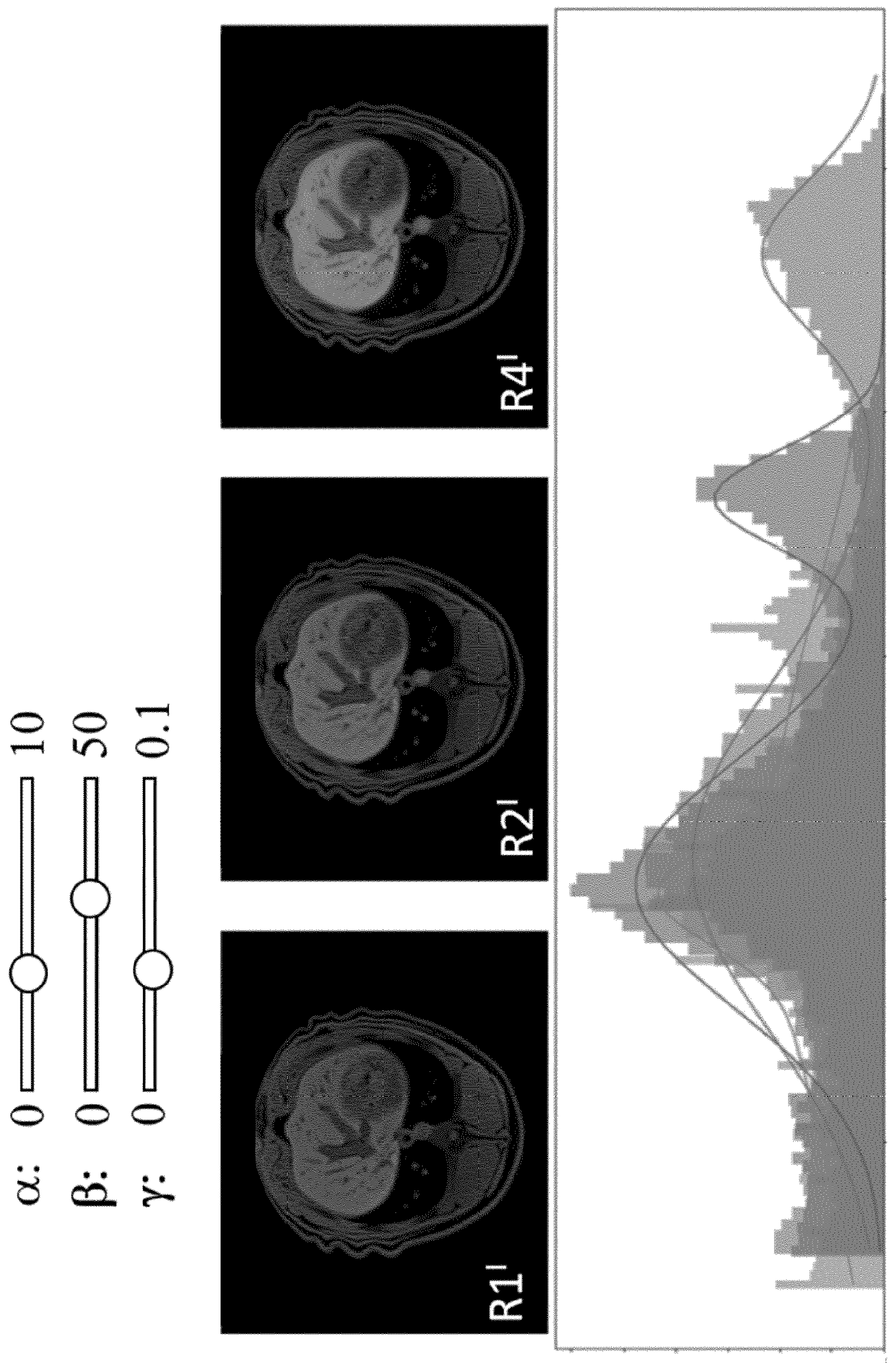


Fig. 5

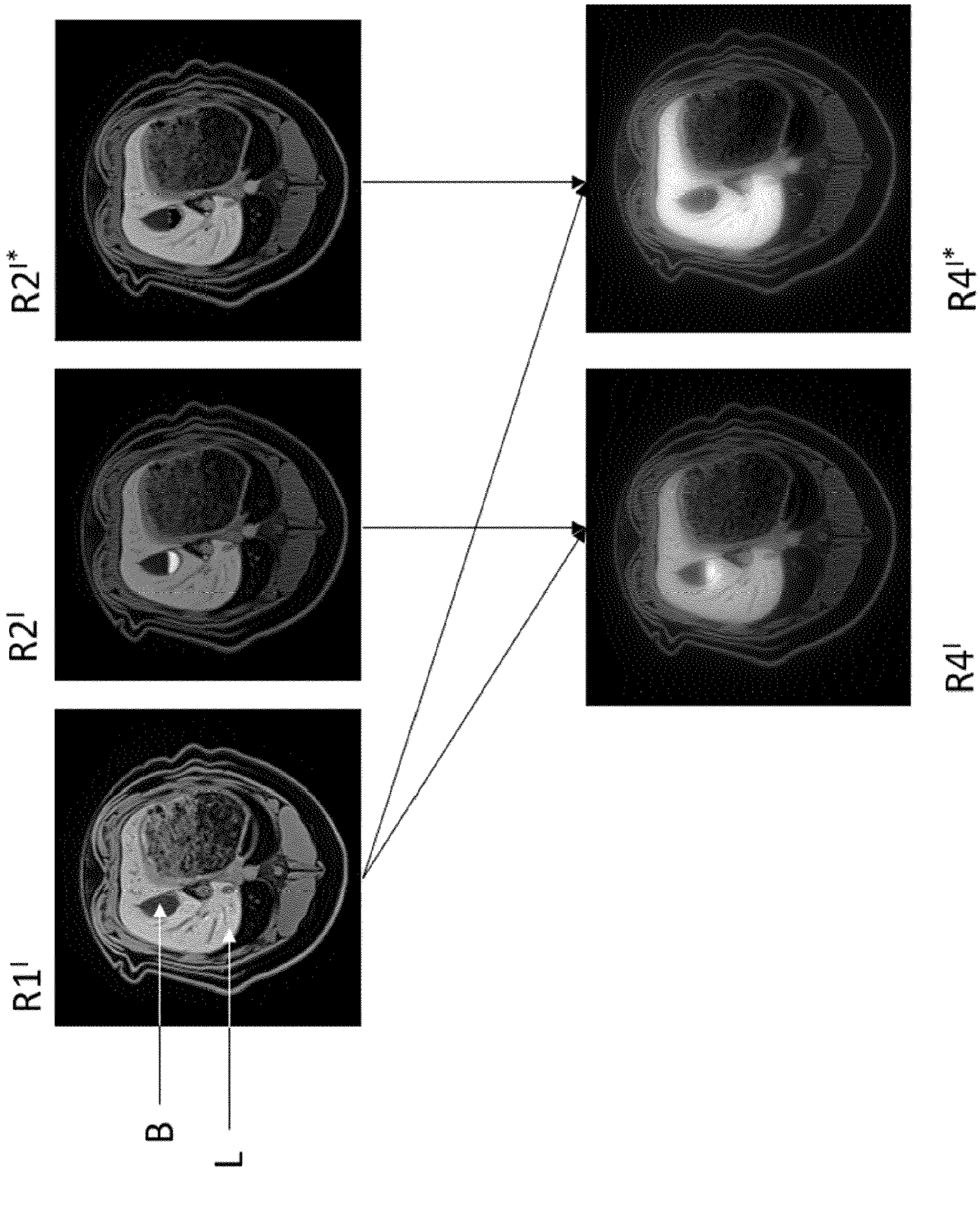


Fig. 6

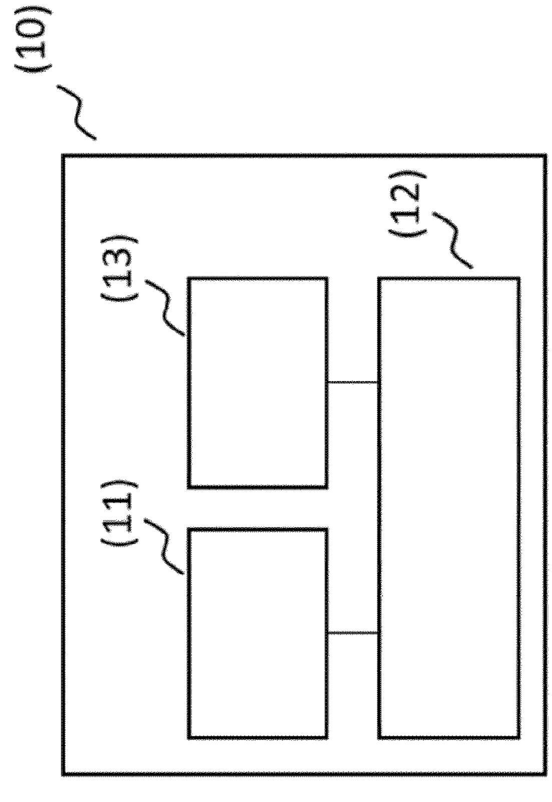


Fig. 7

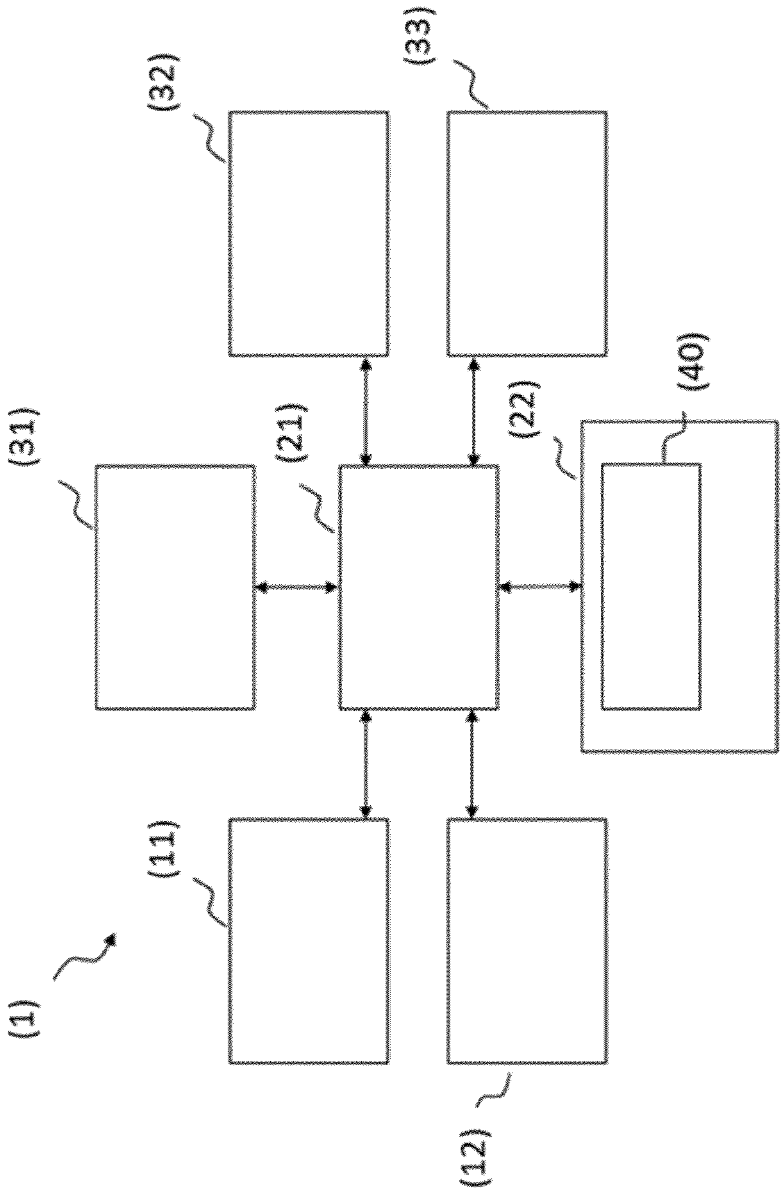


Fig. 8

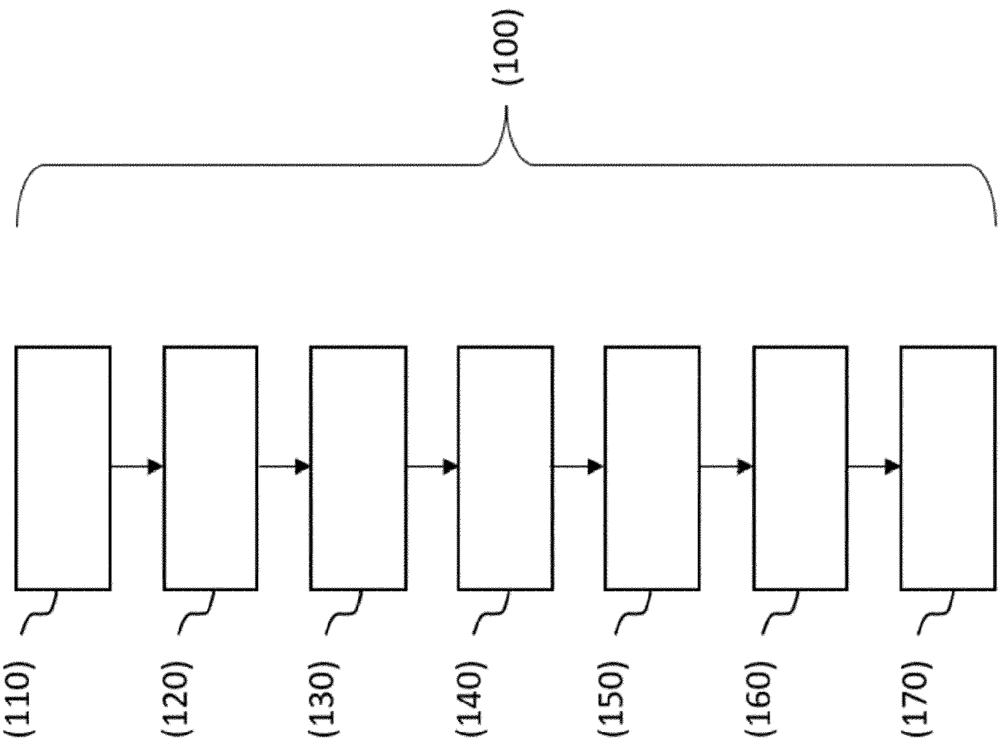


Fig. 9

Europäisches Patentamt
European Patent Office
Office européen des brevets

# EUROPÄISCHER RECHERCHENBERICHT

Nummer der Anmeldung
EP 22 20 7080

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | MONTALT-TORDERA JAVIER ET AL: "Reducing Contrast Agent Dose in Cardiovascular MR Angiography with Deep Learning", JOURNAL OF MAGNETIC RESONANCE IMAGING, Bd. 54, Nr. 3, 22. Februar 2021 (2021-02-22), Seiten 795-805, XP055982847, US ISSN: 1053-1807, DOI: 10.1002/jmri.27573 Gefunden im Internet: URL:https://onlinelibrary.wiley.com/doi/full-xml/10.1002/jmri.27573> * Abschnitt "Preparation of Synthetic Training Data"; Abbildung 2 * ----- | 1-26 | INV. G06T5/00 |

RECHERCHIERTE SACHGEBIETE (IPC)
G06T
G01R

Der vorliegende Recherchenbericht wurde für alle Patentansprüche erstellt

2

| Recherchenort | Abschlußdatum der Recherche | Prüfer |
|---|---|---|
| München | 27. April 2023 | Kollreider, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2019074938 A1
- WO 2016193190 A
- US 6039931 A
- WO 2022194777 A


### In der Beschreibung aufgeführte Nicht-Patentliteratur


- **A. S. L. JASCINTH et al.** Contrast Agents in computed tomography: A Review. *Journal of Applied Dental and Medical Sciences,* 2016, vol. 2 (2), 143-149
- **H. LUSIC et al.** X-ray-Computed Tomography Contrast Agents. *Chem. Rev.,* 2013, vol. 113 (3), 1641-1666, https://www.radiology.wisc.edu/wpcontent/uploads/2017/10/contrast-agents-tutorial.pdf
- **M. R. NOUGH et al.** Radiographic and magnetic resonances contrast agents: Essentials and tips for safe practices. *World J Radiol.,* 28. September 2017, vol. 9 (9), 339-349
- **L. C. ABONYI et al.** Intravascular Contrast Media in Radiography: Historical Development & Review of Risk Factors for Adverse Reactions. *South American Journal of Clinical Research,* 2016, vol. 3 (1), 1-10
- ACR Manual on Contrast Media. 2020
- **A. IGNEE et al.** Ultrasound contrast agents. *Endosc Ultrasound.,* November 2016, vol. 5 (6), 355-362
- **S. SKARE.** Rigid Body Image Realignment in Image Space vs. k-Space. *ISMRM SCIENTIFIC WORKSHOP on Motion Correction,* 2014, https://cds.ismrm.org/protected/Motion_14/Program/Syllabus/Skare.pdf
- **F.J. HARRIS et al.** On the Use of Windows for Harmonic Analysis with the Discrete Fourier Transform. *Proceedings oft he IEEE,* 1978, vol. 66 (1, https://docs.scipy.org/doc/scipy/reference/signal.windows.html
- **K. M. M PRABHU.** Window Functions and Their Applications in Signal Processing. CRC Press, 2014
- **POHMANN et al.** Accurate phosphorus metabolite images of the human heart by 3D acquisition-weighted CSI. *Magnetic Resonance in Medicine: An Official Journal of the International Society for Magnetic Resonance in Medicine,* 2001, vol. 45 (5), 817-826